# EUROPÄISCHE PATENTSCHRIFT

(11) **EP 3 395 021 B1**
(45) Veröffentlichungstag und Bekanntmachung des Hinweises auf die Patenterteilung: **02.08.2023**
(21) Anmeldenummer: 16826001.6
(22) Anmeldetag: 20.12.2016
(51) Int. Cl.: H04L 49/9057, G07D 7/00

(54) **VERFAHREN ZUR ÜBERMITTLUNG VON SENDEDATEN VON EINER SENDEEINRICHTUNG ZU EINER EMPFANGSEINRICHTUNG ZUR VERARBEITUNG DER SENDEDATEN UND MITTEL ZUR DURCHFÜHRUNG DES VERFAHRENS**
METHOD FOR TRANSFERRING TRANSMISSION DATA FROM A TRANSMITTER TO A RECEIVER FOR PROCESSING THE TRANSMISSION DATA AND MEANS FOR CARRYING OUT THE METHOD
PROCÉDÉ DE TRANSMISSION DE DONNÉES D'ÉMISSION D'UN MOYEN D'ÉMISSION À UN MOYEN DE RÉCEPTION POUR TRAITER LES DONNÉES D'ÉMISSION ET MOYENS POUR METTRE EN OEUVRE LE PROCÉDÉ

(30) Priorität: 22.12.2015 DE 102015016716
(43) Veröffentlichungstag der Anmeldung: 31.10.2018
(73) Patentinhaber: Giesecke+Devrient Currency Technology GmbH, 81677 München (DE)
(72) Erfinder: RÖHRL, Wolfgang, 85521 Riemerling (DE)
(74) Vertreter: Giesecke + Devrient IP
(86) Internationale Anmeldenummer: PCT/EP2016/002143
(87) Internationale Veröffentlichungsnummer: WO 2017/108179

(56) Entgegenhaltungen:
- US-A- 5 396 490
- US-A- 5 440 545
- US-A1- 2009 324 053
- US-A1- 2014 079 076
- US-A1- 2014 338 457

## Beschreibung

Die vorliegende Erfindung betrifft ein Verfahren zur Übermittlung von Sendedaten von einer Sendeeinrichtung zu einer Empfangseinrichtung zur Verarbeitung der Sendedaten und Mittel zur Durchführung des Verfahrens.

Bei der maschinellen Prüfung von Banknoten werden diese an einer Sensoreinrichtung mit einem oder mehreren Sensoren vorbeitransportiert, die wenigstens eine physikalische Eigenschaft der Banknoten erfassen und diese beschreibende Sensordaten bilden. Die für eine Banknote erfassten und in der Sensoreinrichtung zwischengespeicherten Sensordaten werden an eine Auswerteeinrichtung gesendet, die diese empfängt und auswertet, beispielsweise um die jeweilige Banknote bezüglich deren Echtheit oder Zustand zu klassifizieren. Vorrichtungen zur Bearbeitung, beispielsweise Sortierung, von Banknoten, die auf diese Weise arbeiten, können zum einen hohe Bearbeitungsgeschwindigkeiten von mehr als 30 Banknoten/Sekunde und zum anderen Sensoren mit einer großen örtlichen Auflösung und damit einer erheblichen Menge an Sensordaten für eine gegebene Banknote aufweisen. Beides führt alternativ, insbesondere aber in Kombination zu einem erheblichen Strom von Sensordaten, der von der Sensoreinrichtung zu der Auswerteeinrichtung übertragen werden muss. Einrichtungen zur schnellen Übertragung der Sensordaten von einer Sensoreinrichtung zu einer Auswerteeinrichtung können jedoch erheblich Kosten verursachen.

Ähnliche Schwierigkeiten können allgemein bei der Bearbeitung von Wertdokumenten auftreten. Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

In US 5,396,490 ist ein Paketvermittlungssystem beschrieben. Das Paketvermittlungssystem verwendet Hardware zur Paketwiederherstellung in einer Paketvermittlungsvorrichtung, um den Gesamtsystemdurchsatz während der Behandlung von Übertragungspaketen, die eine Wiederherstellung erfordern, zu verbessern. Auf diese Weise wird die Wiederherstellung mit minimalem Eingriff eines Prozessors und ohne, dass der Nachrichtendatenabschnitt eines Übertragungspakets vor der erneuten Übertragung in einen anderen Speicherplatz dupliziert werden muss, erreicht.

In US 2014/0079076 A1 ist das Aufteilen und Wiederzusammensetzen von Paketen in Informationstechnologie-Netzwerken beschrieben. Das erneute Zusammensetzen von Fragmenten zu einem Paket umfasst das Empfangen eines ankommenden Fragments eines Pakets aus einem Netzwerk, wobei jedes Fragment ein Segment des Pakets und einen Header umfasst, und das Erzeugen eines Wiederzusammensetzungsschlüssels unter Verwendung ausgewählter Informationen aus dem ankommenden Fragment-Header, wobei die ausgewählte Information für alle Fragmente des Pakets gleich ist. Weiter umfasst das erneute Zusammensetzen das Prüfen einer Wiederzusammenfügungstabelle in einem inhaltsadressierbaren Speicher, um einen Eintrag zu finden, der einen zum Wiederzusammensetzungsschlüssel passenden logischen Schlüssel enthält, das Verwenden eines Inhaltsindex im gefundenen Eintrag und einer Sequenznummer des ankommenden Fragments innerhalb des Pakets, und das Bestimmen eines Ortsversatzes in einem Wiederzusammensetzungspufferbereich zum Speichern des ankommenden Fragments an dem Ortsversatz im Wiederzusammensetzungspufferbereich für das Paket zum Wiederzusammensetzen.

Der vorliegenden Erfindung liegt daher die Aufgabe zugrunde, ein Verfahren zur Übermittlung von Sendedaten, beispielsweise Sensordaten, von einer Sendeeinrichtung zu einer Empfangseinrichtung anzugeben, das eine schnelle Datenübertragung ermöglicht, aber keinen hohen Aufwand zur Durchführung erfordert. Weiter sollen Mittel zur Durchführung des Verfahrens angegeben werden.

Die Aufgabe wird gelöst durch ein Verfahren mit den Merkmalen des Anspruchs 1 und insbesondere ein Verfahren zum Übertragen eines Sendedatenblocks von einer Sendeeinrichtung über eine Ethernet-Verbindung zu einer Empfangseinrichtung, die einen Speicher zum Speichern eines übertragenen Sendedatenblocks und einen Prozessor zur wenigstens teilweisen Verarbeitung des übertragenen, in dem Speicher gespeicherten Sendedatenblocks aufweist, bei dem die Sendeeinrichtung aus den Daten des Sendedatenblocks eine Folge von Ethernet-Paketen bildet, die jeweils Verwaltungsdaten und einen Sendedaten-Teilblock, der aus wenigstens einem Teil der Daten des Sendedatenblocks gebildet ist, umfassen, so dass die Sendedaten-Teilblöcke der Ethernet-Pakete der Folge die Daten des Sendedatenblocks umfassen, wobei die Verwaltungsdaten Verwaltungsdaten umfassen, aus denen ermittelbar ist, ob eines der Ethernet-Pakete das letzte Ethernet-Paket der Folge ist, und die gebildeten Ethernet-Pakete über die Ethernet-Verbindung an die Empfangseinrichtung sendet, und bei dem die Empfangseinrichtung die Ethernet-Pakete der jeweiligen Folge empfängt und unter Verwendung wenigstens eines Teils der Verwaltungsdaten die Sendedaten-Teilblöcke der empfangenen Ethernet-Pakete der Folge von Ethernet-Paketen für den Sendedatenblock in den Speicher schreibt, wobei nicht bei oder nach dem Schreiben jedes der Sendedaten-Teilblöcke ein Interrupt an den Prozessor gesendet wird.

Die Aufgabe wird weiter gelöst durch eine Sendeeinrichtung mit den Merkmalen des Anspruchs 8 und insbesondere eine Sendeeinrichtung zum Senden wenigstens eines Sendedatenblocks, die einen Sendepuffer zum wenigstens teilweisen und temporären Speichern von Daten des Sendedatenblocks, und eine Ethernet-Schnittstelle aufweist, und dazu ausgebildet ist, aus dem Sendedatenblock eine Folge von Ethernet-Paketen zu bilden, die jeweils Verwaltungsdaten und einen aus dem jeweiligen Sendedatenblock gebildeten Sendedaten-Teilblock umfassen, so dass die Sendedaten-Teilblöcke der Ethernet-Pakete der Folge die Daten des Sendedatenblocks umfassen, wobei die Verwaltungsdaten Verwaltungsdaten umfassen, aus denen ermittelbar ist, ob eines der Ethernet-Pakete das letzte Ethernet-Paket der Folge ist, und die Ethernet-Pakete über die Ethernet-Schnittstelle zu versenden. Die Sendeeinrichtung kann zur der Durchführung eines erfindungsgemäßen Verfahrens verwendet werden.

Die Aufgabe wird auch gelöst durch eine Empfangseinrichtung mit den Merkmalen des Anspruchs 12 und insbesondere eine Empfangseinrichtung zum Empfang von Folgen von Ethernet-Paketen, die von einer erfindungsgemäßen Sendeeinrichtung bildbar sind und/oder bei einem erfindungsgemäßen Verfahren gebildet wurden, und jeweils Sendedaten-Teilblöcke eines Sendedatenblocks enthalten, mit einem Speicher zum Speichern eines übertragenen Sendedatenblocks, einem Prozessor zum wenigstens teilweisen Verarbeiten des in dem Speicher gespeicherter Sendedatenblocks, und einem Empfangsabschnitt zum Empfang von Folgen von Ethernet-Paketen mit Daten des Sendedatenblocks und Schreiben der in den Ethernet-Paketen jeweils enthaltenen Sendedaten-Teilblöcke in den Speicher unter Verwendung wenigstens eines Teils der Verwaltungsdaten, wobei der Empfangsabschnitt weiter so ausgebildet ist, dass der Empfangsabschnitt nicht bei oder nach dem Schreiben jedes der Sendedaten-Teilblöcke einen Interrupt an den Prozessor sendet. Die Empfangseinrichtung kann zur Durchführung eines erfindungsgemäßen Verfahrens verwendet werden.

Im Rahmen der vorliegenden Erfindung werden die von der Sendeeinrichtung ausgeführten Verfahrensteile im Zusammenhang mit der Übertragung eines Sendedatenblocks als Sendeverfahren und die von der Empfangseinrichtung ausgeführten Verfahrensteile im Zusammenhang mit der Übertragung als Empfangsverfahren bezeichnet.

Bei dem Verfahren werden Daten von der Sendeeinrichtung zu der Empfangseinrichtung übertragen. Die Sendeeinrichtung kann prinzipiell eine beliebige Datenquelle sein. Vorzugsweise kann sie jedoch wenigstens ein Teil eines Sensors, insbesondere eines Sensors zu Untersuchung von Wertdokumenten sein, oder umfasst diesen. Besonders in Betracht kommen solche Sensoren, die dazu ausgebildet sind, wenigstens eine physikalische Eigenschaft eines Wertdokuments ortsaufgelöst zu erfassen und Sensordaten zu bilden, die die erfasste Eigenschaft ortsaufgelöst, d. h. in Abhängigkeit vom Ort auf dem Wertdokument wiedergeben. Beispiele hierfür sind Ultraschallsensoren, hochauflösende optische Sensoren und/oder hochauflösende Magnetsensoren. Die Sendeeinrichtung kann jedoch gemäß einer anderen Alternative vorzugsweise durch eine Auswerteeinrichtung oder wenigstens einen Teil einer Auswerteeinrichtung gegeben sein, die selbst Daten, beispielsweise Sensordaten, verarbeitet und wenigstens einen Teil der Daten und/oder Teilergebnisse oder Ergebnisse der Verarbeitung an wenigstens eine andere Einrichtung übertragt, damit sie dort weiter verarbeitet werden.

Die Sendeeinrichtung kann einen Sendepuffer, d. h. wenigstens einen Bereich eines, vorzugsweise flüchtigen, Speichers, aufweisen, der zum Speichern der Sendedaten, vorzugsweise nur temporären Speichern der Sendedaten, verwendet wird. Weiter kann die Sendeeinrichtung noch über wenigstens eine Komponente verfügen, die die Sendedaten in den Sendepuffer schreibt.

Die Empfangseinrichtung kann prinzipiell eine beliebige Vorrichtung sein, die Daten, insbesondere die Sendedaten, empfängt und vorzugsweise verarbeitet. Im einfachsten Fall braucht die Verarbeitung nur das Speichern oder Weiterleiten der Daten zu umfassen. Vorzugsweise umfasst die Verarbeitung jedoch das Ermitteln eines Ergebnisses aus den empfangenen Sendedaten, das nicht die Daten selbst sind. Vorzugsweise kann die Empfangseinrichtung eine Auswerteeinrichtung zur Verarbeitung der empfangenen Sendedaten, insbesondere Sensordaten, sein. Die Empfangseinrichtung kann einen Speicher zum wenigstens temporären Speichern empfangener Daten und wenigstens einen Prozessor zum wenigstens teilweisen Verarbeiten der empfangenen Sendedaten umfassen. Bei einer anderen Ausführungsform kann eine erfindungsgemäße Empfangseinrichtung auch wenigstens ein Teil eines Sensors, insbesondere eines Sensors zu Untersuchung von Wertdokumenten sein, bzw. einer Sensoreinrichtung sein oder diesen bzw. diese umfassen. Besonders in Betracht kommen solche Sensoren, die dazu ausgebildet sind, wenigstens eine physikalische Eigenschaft eines Wertdokuments ortsaufgelöst zu erfassen und Sensordaten zu bilden, die die erfasste Eigenschaft ortsaufgelöst, d. h. in Abhängigkeit vom Ort auf dem Wertdokument wiedergeben.

Bei dem Verfahren überträgt die Sendeeinrichtung die Sendedaten des Sendedatenblocks über eine Ethernet-Verbindung an die Empfangseinrichtung. Die Sendeeinrichtung kann hierzu eine Ethernet-Schnittstelle umfassen und so ausgebildet sein, dass zu übertragende Sendedaten über die Ethernet-Schnittstelle übertragen werden. Die Empfangseinrichtung empfängt die über die Ethernet-Schnittstelle gesendeten Daten. Dazu ist sie mit der Sendeeinrichtung über die Ethernet-Verbindung verbunden und kann über den Empfangsabschnitt verfügen.

Bei dem Verfahren wird ein Sendedatenblock übertragen. Unter einem Sendedatenblock wird eine Menge von Daten verstanden, die nach einem vorgegebenen Kriterium als zusammengehörig angesehen und behandelt werden, aber nicht unbedingt in einem Speicher der Sendeeinrichtung in einem lückenlosen oder zusammenhängenden Bereich gespeichert zu sein brauchen. Im Fall von Sendedaten eines Sensors kann der Sendedatenblock insbesondere diejenigen Sensordaten umfassen, die für ein Wertdokument gebildet wurden.

Die Sendeeinrichtung bildet aus den Daten des Sendedatenblocks eine Folge von Ethernet-Paketen, die jeweils Verwaltungsdaten und einen Sendedaten-Teilblock umfassen. Die Sendedaten-Teilblöcke sind aus den Daten des Sendedatenblocks so gebildet, dass die Sendedaten-Teilblöcke der Folge der gebildeten Ethernet-Pakete insgesamt die Daten des Sendedatenblocks umfassen, so dass aus den Sendedaten-Teilblöcken der Folge der Sendedatenblock wiederherstellbar ist.

Weiter enthalten die Ethernet-Pakete jeweils Verwaltungsdaten. Diese können zunächst die üblichen Verwaltungsdaten in Ethernet-Paketen, beispielsweise eine Quell- und einem Zieladresse und eine Typkennung umfassen. Weiter enthalten die Verwaltungsdaten für die Ethernet-Pakete Verwaltungsdaten, aus denen ermittelbar ist, ob das Ethernet-Paket das letzte Ethernet-Paket der Folge ist. Beispielsweise könnte ein entsprechendes Bit gesetzt werden, andere Möglichkeiten sind im Folgenden noch beschrieben. Vorzugsweise ist aus Verwaltungsdaten in dem Verwaltungsabschnitt auch ermittelbar, ob ein Ethernet-Paket das erste der Folge ist. Dies hat den Vorzug, dass beim Empfang erkannt werden kann, dass Daten eines neuen Sendedatenblocks übertragen werden.

Vorzugsweise können die Ethernet-Pakete so aufgebaut sein, dass diese einen üblichen Verwaltungsabschnitt ("Ethernet-Header") mit einem Teil der Verwaltungsdaten wie Quell- und Zieladresse sowie eine Typkennung, gegebenenfalls ein VLAN-Tag, und einen Nutzdatenblock ("payload") umfassen, so dass die Ethernet-Pakete die übliche Form haben. Im Rahmen der vorliegenden Erfindung werden diejenigen Verwaltungsdaten, die nicht in dem üblichen Verwaltungsabschnitt enthalten sind, als Protokoll-Verwaltungsdaten bezeichnet. Der Nutzdatenblock kann dann diejenigen Verwaltungsdaten, die nicht in dem üblichen Verwaltungsabschnitt enthalten sind, also die Protokoll-Verwaltungsdaten, und den Sendedaten-Teilblock enthalten. Der Nutzdatenblock kann die übliche Länge haben. Es können jedoch auch sogenannte Jumbo-Blocks verwendet werden, die wesentlich größer sind. Diese Ausbildung ermöglicht die Verwendung kommerziell erhältlicher Komponenten.

Diese Ethernet-Pakete werden über die Ethernet-Verbindung an die Empfangseinrichtung übertragen. Diese empfängt die Ethernet-Pakete. Bei der erfindungsgemäßen Empfangseinrichtung wird dazu der Empfangsabschnitt verwendet. Die Sendedaten-Teilblöcke der Ethernet-Pakete der Folge werden, vorzugsweise direkt, d. h. ohne Beteiligung des Prozessors, in den Speicher der Empfangseinrichtung geschrieben. Dabei wird aber nicht bei jedem Schreiben eines Sendedaten-Teilblocks in den Speicher ein Interrupt an den Prozessor gesendet. Unter einem Interrupt wird dabei ein durch Hardware (oder Software) erzeugtes Signal für einen Prozessor verstanden, das ein Ereignis anzeigt, das eine sofortige Aufmerksamkeit oder Reaktion des Prozessors erfordert, und insbesondere dazu führen kann, dass der Prozessor die Ausführung von Programmcode unterbricht, der von ihm gerade ausgeführt wird. Dies hat den Vorteil, dass bei einer Übertragung eines großen Sendedatenblocks über eine schnelle Ethernet-Verbindung eine Vielzahl von Ethernet-Paketen gebildet und übertragen wird, wobei aber nicht bei jedem Empfang der gebildeten Ethernet-Pakete ein Interrupt ausgelöst wird. Würde ein Interrupt bei jedem Empfang eines Ethernet-Paketes der Folge ausgelöst, würde der Empfang der Sendedaten zu einer häufigen Unterbrechung der Ausführung eines Programms, insbesondere zur Auswertung von Daten, führen und damit die Ausführung des Programms wesentlich behindern.

Die Sendedaten-Teilblöcke können so in den Speicher geschrieben werden, dass der Sendedatenblock wiederhergestellt wird.

Auf diese Weise können weit verbreitete preisgünstige Komponenten, die nach dem Ethernet-Standard arbeiten, verwendet werden, ohne dass die Auswerteeinrichtung bei der Auswertung von Daten stark behindert wird. Weiter können Sendeeinrichtung und Empfangseinrichtung so ausgelegt sein, dass diese galvanisch voneinander getrennt sind.

Die Sendeeinrichtung kann die Ethernet-Pakete prinzipiell beliebig bilden. Gemäß einer ersten Ausführungsform weist die Sendeeinrichtung vorzugsweise einen Prozessor und Instruktionen eines Computerprogramms, bei deren Ausführung der Prozessor aus dem Sendedatenblock in dem Sendepuffer wenigstens die Sendedaten-Teilblöcke, vorzugweise auch wenigstens die Protokoll-Verwaltungsdaten, für die Folge von Ethernet-Paketen bildet, auf. Diese Ausführungsform hat den Vorteil, dass sie besonders einfach zu realisieren ist.

Gemäß einer weiteren Ausführungsform kann die Sendeeinrichtung ein mit der Ethernet-Schnittstelle verbundenes oder wenigstens einen Teil der Ethernet-Schnittstelle bildendes FPGA (Field Programmable Gate Array) aufweisen, das so konfiguriert bzw. programmiert ist, dass es aus dem Sendedatenblock die Verwaltungsdaten und die Sendedaten-Teilblöcke für die jeweilige Folge von Ethernet-Paketen bildet. Die Protokoll-Verwaltungsdaten und die Sendedaten-Teilblöcke werden vorzugsweise als Nutzdatenblock an die Ethernet-Schnittstelle zum Versenden als Ethernet-Paket weitergereicht. Vorzugsweise kann die Ethernet-Schnittstelle einen PHY aufweisen, der mit dem FPGA über eine Datenverbindung verbunden ist, wobei das FPGA weiter so konfiguriert bzw. programmiert ist, dass es auch als Ethernet-Controller arbeitet. Diese Ausführungsform ist besonders dann von Vorteil, wenn die Sendeeinrichtung auch als Empfangseinrichtung dienen kann. Das FPGA ist dann vorzugsweise so konfiguriert bzw. programmiert, dass es auch die Funktionen eines FPGA der Empfangseinrichtung, wie sie im Folgenden beschrieben ist ausführen kann.

Weiter kann die Ethernet-Schnittstelle bei der Sendeeinrichtung einen Ethernet-Controller mit einer internen DMA-Funktionalität aufweisen, der so ausgebildet ist, dass er selbständig Deskriptor-Listen abarbeiten kann. Der Prozessor braucht dem Ethnernet-Controller dann nur eine Deskriptoren-Liste mit den Adressen der als Nutzdatenblock zu verwendenden Sendepufferbereiche an den Ethernet-Controller zu übermitteln, der mittels der DMA-Funktionalität (Direct Memory Access-Funktionalität) die Nutzdatenblöcke für die Ethernet-Pakete aus dem Sendepuffer liest. Diese Ausführungsform ist besonders vorteilhaft bei Sendevorrichtungen, die kein FPGA aufweisen.

Bei dem Verfahren ist es vorgesehen, dass in der Empfangseinrichtung nicht bei oder nach jedem Schreiben von Sendedaten-Teilblöcken empfangener Ethernet-Pakete in den Speicher ein Interrupt an den Prozessor der Empfangseinrichtung abgegeben wird. Vorzugsweise wird bei dem Verfahren ein Empfangssignal, beispielsweise ein Interrupt, an den Prozessor abgegeben, vorzugsweise nur abgegeben, wenn eine vorgegebene Anzahl von Ethernet-Paketen derselben Folge empfangen und die Daten bzw. Sendedaten der Sendedaten-Teilblöcke darin in den Speicher geschrieben wurden, und/oder beim Empfangen oder Speichern wenigstens ein vorgegebener Fehler auftritt und/oder die Sendedaten aus dem Nutzdatenblock oder Sendedaten-Teilblock des letzten Ethernet-Paketes der Folge in den Speicher geschrieben wurden. Bei der Empfangseinrichtung ist der Empfangsabschnitt dann vorzugsweise so ausgebildet ist, dass er ein Empfangssignal, beispielsweise einen Interrupt, an den Prozessor abgibt, vorzugsweise nur abgibt, wenn eine vorgegebene Anzahl von Ethernet-Paketen der Folge empfangen und die Sendedaten-Teilblöcke darin in den Speicher geschrieben wurden, und/oder beim Empfangen oder Speichern wenigstens ein vorgegebener Fehler auftritt und/oder die Sendedaten aus dem Nutzdatenblock des letzten Ethernet-Paketes der Folge in den Speicher geschrieben wurden. Die vorgegebene Anzahl von Ethernet-Paketen ist dabei vorzugsweise größer als 5. Insbesondere die letzte Alternative, gegebenenfalls in Kombination mit der vorletzten Alternative, hat den Vorteil, dass das Senden des Interrupts erst nach Empfang des letzten Ethernet-Pakets der Folge zu einer nur sehr geringen Belastung des Prozessors der Empfangseinrichtung führt.

Prinzipiell kann der Empfangsabschnitt der Empfangseinrichtung beliebig entsprechend seiner Funktion ausgebildet sein. Bei dem Verfahren ist es jedoch bevorzugt, dass die Empfangseinrichtung ein FPGA aufweist, und mittels des FPGA unter Verwendung der Verwaltungsdaten die Sendedaten-Teilblöcke aus empfangenen Ethernet-Paketen in den Speicher geschrieben werden und dass vorzugsweise nach dem Schreiben der Sendedaten-Teilblöcke einer vorgegebenen Anzahl von Ethernet-Paketen der Folge in den Speicher und/oder Schreiben eines letzten Sendedaten-Teilblocks der Folge die Abgabe eines Empfangssignals, beispielsweise eines Interrupts, an den Prozessor auslöst. Dies bietet den Vorteil, dass FPGAs einfach verfügbar sind und eine hohe Verarbeitungsgeschwindigkeit aufweisen, was den Prozessor entlastet. Bei der Empfangseinrichtung kann dazu der Empfangsabschnitt ein FPGA aufweisen, wobei der Empfangsabschnitt so ausgebildet und das FPGA so konfiguriert bzw. programmiert ist, dass mittels des FPGA unter Verwendung der Verwaltungsdaten die Sendedaten-Teilblöcke aus empfangenen Ethernet-Paketen in den Speicher geschrieben werden und dass vorzugsweise das FPGA nach Schreiben der Sendedaten-Teilblöcke einer vorgegebenen Anzahl von Ethernet-Paketen der Folge in den Speicher und/oder Schreiben eines letzten Sendedaten-Teilblocks der Folge die Abgabe eines Empfangssignals, beispielsweise eines Interrupts, an den Prozessor auslöst.

Gemäß einer Ausbildungsform kann der Empfangsabschnitt einen Ethernet-Controller mit einen PHY (Ethernet Physical Layer Transceiver) und einem Media Access Controller aufweisen, der mit dem FPGA verbunden ist, wobei das FPGA insbesondere so konfiguriert bzw. programmiert ist, dass es Nutzdatenblöcke der empfangenen Ethernet-Pakete empfängt und unter Verwendung der Verwaltungsdaten die darin enthaltenen Sendedaten-Teilblöcke in den Speicher schreibt.

Gemäß einer anderen Ausführungsform kann der Empfangsabschnitt einen PHY aufweisen, der mit dem FPGA über eine Datenverbindung verbunden ist, wobei das FPGA weiter so konfiguriert bzw. programmiert ist, dass es auch als Ethernet-Controller arbeitet. Das FPGA ist dann dazu eingerichtet, Sendedaten-Teilblöcke aus von dem PHY erhaltenen Ethernet-Paketen, vorzugsweise direkt, in den Speicher zu schreiben. Diese Ausführungsform hat den Vorteil, dass durch die Integration des Ethernet-Controller, bzw. dessen Funktion in das FPGA, die Empfangseinrichtung einfacher herzustellen ist und insbesondere die Datenverbindung zwischen Ethernet-Controller und FPGA entfallen kann.

FGPA, Prozessor und Speicher können bei beiden Ausführungsformen prinzipiell in beliebiger Weise über Datenverbindungen verbunden sein. Vorzugsweise sind bei der Empfangseinrichtung das FPGA, der Prozessor und der Speicher über ein PCIe-Netzwerk verbunden. Dies bietet den Vorteil, dass einfach ein hoher Datendurchsatz erzielt werden kann. Weist die Sendeeinrichtung auch ein FPGA auf, sind vorzugsweise bei dieser wenigstens das FPGA und der Sendepuffer über ein PCIe-Netzwerk verbunden.

Grundsätzlich genügt es bei dem Verfahren, dass die Verwaltungsdaten Verwaltungsdaten umfassen, aus denen ermittelbar ist, ob ein Ethernet-Paket der Folge von Ethernet-Paketen das letzte der Folge ist. Bei einer bevorzugten Ausführungsform können bei dem Verfahren die Verwaltungsdaten jedes der Ethernet-Pakete der Folge von Ethernet-Paketen für den Sendedatenblock eine Sequenzkennung umfassen, die den Sendedaten-Teilblock so kennzeichnet, dass bei deren Verwendung aus den Sendedaten-Teilblöcken der Sendedatenblock gebildet werden kann, und zum Schreiben der Sendedaten-Teilblöcke in den Speicher die Sequenzkennung verwendet wird. Die Sequenzkennung wird dabei von dem Empfangsabschnitt, falls dieser in FPGA besitzt, vorzugsweise von dem FPGA, verwendet. Damit können Fehler aufgrund der Vertauschung von Paketen vermieden werden. Weiter kann die Sequenzkennung dazu verwendet werden, die Vollständigkeit der Übermittlung des Sendedatenblocks zu überprüfen. Ein Schreiben kann dann nur bei einer passenden Sequenzkennung erfolgen, ansonsten wird ein Fehler festgestellt, der vorzugsweise zur Abgabe eines Signals führt, das einen nochmalige Übersendung des Sendedaten-Teilblocks, vorzugsweise des Sendedatenblocks führt.

Insbesondere kann aus der Sequenzkennung ermittelbar sein, in welcher Reihenfolge die Sendedaten-Teilblöcke bzw. Ethernet-Pakete der Folge gebildet wurden, und die Empfangseinrichtung kann vorzugsweise die Sendedaten-Teilblöcke der Folge entsprechend deren durch die Sequenzkennung gegebenen Reihenfolge in den Speicher schreiben, so dass der Sendedaten-block resultiert. Die Sendeeinrichtung kann dazu vorzugsweise weiter so ausgebildet sein, dass sie beim Bilden der Folge von Ethernet-Paketen Verwaltungsdaten bildet, die Sequenzkennungen umfassen, aus denen ermittelbar ist, in welcher Reihenfolge die Sendedaten-Teilblöcke bzw. Ethernet-Blöcke der Folge gebildet wurden. Bei der Empfangseinrichtung kann entsprechend vorzugsweise der Empfangsabschnitt so ausgebildet, im Fall der Verwendung eines FPGA dieses so konfiguriert bzw. programmiert, sein, aus den Sequenzkennungen in den Verwaltungsdaten eine Reihenfolge der Sendedaten-Teilblöcke der Folge zu ermitteln und die die Sendedaten-Teilblöcke der Folge entsprechend deren durch die Sequenzkennungen gegebenen Reihenfolge in den Speicher schreiben, so dass der Sendedatenblock resultiert. Dies hat insbesondere den Vorteil, dass die Wiederherstellung des Sendedatenblocks einfacher ist und ein Verlust eines Ethernet-Paketes einfach feststellbar ist. Bei der Empfangseinrichtung kann der Empfangsabschnitt so ausgebildet, im Fall der Verwendung eines FPGA dieses so konfiguriert bzw. programmiert sein, dass beim Schreiben der Sendedaten-Teilblöcke die Sendedaten-Teilblöcke entsprechend deren Reihenfolge in den Speicher geschrieben werden, so dass der Sendedatenblock resultiert.

In den meisten Anwendungsfällen wird nicht nur ein Sendedatenblock übermittelt werden, sondern nacheinander mehrere Sendedatenblöcke, beispielsweise für aufeinanderfolgende Wertdokumente. Bei dem Verfahren ist es daher bevorzugt, dass die Verwaltungsdaten jedes der Ethernet-Pakete der Folge von Ethernet-Paketen für den Sendedatenblock eine Sendedaten-block-Kennung umfassen, die den Sendedatenblock kennzeichnet, und vorzugsweise die Sendedatenblock-Kennung beim Empfang der Ethernet-Pakete der Folge und/oder beim Schreiben der Sendedaten-Teilblöcke verwendet wird. Bei der Sendeeinrichtung ist es dazu bevorzugt, dass diese so ausgebildet ist, dass die Verwaltungsdaten jedes der Ethernet-Pakete der Folge von Ethernet-Paketen für den Sendedatenblock eine Sendedatenblock-Kennung umfassen, die den Sendedatenblock kennzeichnet. Bei der Empfangseinrichtung ist es daher bevorzugt, dass die Verwaltungsdaten jedes der Ethernet-Pakete der Folge von Ethernet-Paketen für den Sendedatenblock eine Sendedatenblock-Kennung umfassen, die den Sendedatenblock kennzeichnet, und der Empfangsabschnitt so ausgebildet ist, dass er die Sendedatenblock-Kennung beim Empfang der Ethernet-Pakete der Folge und/oder beim Schreiben der Sendedaten-Teilblöcke verwendet. Soweit der Empfangsabschnitt ein FPGA umfasst, kann dieses so konfiguriert bzw. programmiert sein, dass die Sendedatenblock-Kennung beim Empfang der Ethernet-Pakete der Folge und/oder beim Schreiben der Sendedaten-Teilblöcke verwendet. Die Sendedatenblock-Kennung kann insbesondere so verwendet werden, dass diese geprüft wird und nur Sendedaten-Teilblöcke mit derselben Sendedatenblock-Kennung in einen für Empfangsdaten vorgesehenen Bereich des Speichers geschrieben werden.

Es ist möglich, dass bei der Übertragung von Ethernet-Paketen Fehler auftreten. Bei dem Verfahren ist es dazu bevorzugt, dass für wenigstens einen der Sendedaten-Teilblöcke wenigstens zwei Ethernet-Pakete, deren Nutzdatenblock jeweils den Sendedaten-Teilblock enthält, gebildet und über die Ethernet-Verbindung an die Empfangseinrichtung gesendet werden und bei Empfang von mehr als einem Ethernet-Paket für denselben Sendedaten-Teilblock die Daten des Sendedaten-Teilblocks nur einmal in den Speicher geschrieben werden oder die Daten des Sendedaten-Teilblocks in dem Speicher überschrieben werden. Die Sendeeinrichtung kann dazu vorzugsweise so ausgebildet sein, dass sie für wenigstens einen der Sendedaten-Teilblöcke, vorzugsweise jeden der Sendedaten-Teilblöcke, wenigstens zwei Ethernet-Pakete, deren Nutzdatenblock jeweils den Sendedaten-Teilblock enthält, bildet und über die Ethernet-Verbindung an die Empfangseinrichtung sendet. Bei der Empfangseinrichtung kann weiter vorzugsweise der Empfangsabschnitt so ausgebildet sein, dass dieser bei Empfang von mehr als einem Ethernet-Paket für denselben Sendedaten-Teilblock die Daten des Sendedaten-Teilblocks nur einmal in den Speicher schreibt oder die Daten des Sendedaten-Teilblocks in dem Speicher überschreibt. Dazu verwendet er vorzugsweise wenigstens einen Teil der Verwaltungsdaten. Beispielsweise kann er prüfen, ob ein Ethernet-Paket mit demselben Sendedaten-Teilblock bereits empfangen wurde, und, wenn dies der Fall ist, das Ethernet-Paket verwerfen oder den Sendedaten-Teilblock in dem Speicher überschreiben. Dies erlaubt es auf einfache Weise dem Verlust einzelner Ethernet-Pakete vorzubeugen.

Eine bevorzugte Weiterbildung betrifft den Fall, dass mehrere Sendeeinrichtungen Sendedatenblöcke an die bzw. dieselbe Empfangseinrichtung übertragen müssen. Bei einer bevorzugten Weiterbildung des Verfahrens bildet wenigstens eine weitere Sendeeinrichtung, die mit der Empfangseinrichtung über eine Ethernet-Verbindung verbunden ist, aus den Daten eines weiteren, von ihr zu versendenden Sendedatenblocks eine weitere Folge von Ethernet-Paketen, die jeweils Verwaltungsdaten und einen Sendedaten-Teilblock, der aus wenigstens einem Teil der Daten gebildet ist, umfassen, so dass die Sendedaten-Teilblöcke der Ethernet-Pakete der weiteren Folge die Daten des weiteren Sendedatenblocks umfassen, wobei die Verwaltungsdaten Verwaltungsdaten umfassen, aus denen ermittelbar ist, ob eines der Ethernet-Pakete das letzte Ethernet-Paket der weiteren Folge ist, und sendet die gebildeten Ethernet-Pakete über die Ethernet-Verbindung an die Empfangseinrichtung. Bei dem Verfahren kann die Empfangseinrichtung nach dem Empfangen der Ethernet-Pakete diese in Abhängigkeit von der Sendeeinrichtung, die diese gesendet hat, vorzugsweise getrennt nach Sendeeinrichtung, verarbeiten. Insbesondere kann die getrennte Verarbeitung darin bestehen, dass getrennt nach Sendeeinrichtung gleiche Verarbeitungsschritte unter Verwendung der Verwaltungsdaten ausgeführt werden, wobei die Sendedaten-Teilblöcke von einer jeweiligen Sendeeinrichtung in einen jeweiligen Speicherbereich geschrieben werden, der der jeweiligen Sendeeinrichtung, beispielsweise durch den Prozessor der Empfangseinrichtung, zugeordnet ist. Gegenstand der Erfindung ist daher ein System mit wenigstens zwei erfindungsgemäßen Sendeeinrichtungen und einer solchen Empfangseinrichtung, bei dem die Sendeeinrichtungen über Ethernet-Verbindungen mit der Empfangseinrichtung verbunden sind.

Die Verbindung der Sendeeinrichtungen mit der Empfangseinrichtung kann beispielsweise direkt, d. h. über Punkt-zu-Punkt-Verbindungen erfolgen. Bei einer bevorzugte Weiterbildung umfasst die Empfangseinrichtung dann mehrere PHY, die mit dem FPGA verbunden sind, und das FPGA ist so konfiguriert bzw. programmiert, dass es Sendedaten-Teilblöcke von Ethernet-Paketen, die von einem jeweiligen der PHY erhaltenen empfangen wurden, jeweils in den Speicher schreibt, so dass der jeweilige Sendedatenblock wiederhergestellt wird. Dabei werden die Sendedaten-Teilblöcke für den Sendedatenblock in einen Teil des Speichers geschrieben, der dem jeweiligen PHY und damit der damit verbundenen Sendeeinrichtung verbunden ist. Dabei kann für jeden PHY ein Ethernet-Controller vorgesehen sein, der von dem PHY empfangene Ethernet-Pakete empfängt und wenigstens die Nutzdaten an das FPGA sendet. Vorzugsweise ist das FPGA aber so konfiguriert bzw. programmiert, dass es zusammen mit einem jeweiligen der PHY jeweils einen Ethernet-Controller bildet. Diese Ausführungsform bietet den Vorteil, dass mehrere Sendeeinrichtungen über Ethernet-Verbindungen mit einer Empfangseinrichtung verbunden sein können, in jeweils eine der Sendeeinrichtungen mit einem der PHY verbunden wird. Das FPGA ist insbesondere so konfiguriert bzw. programmiert, dass es in dem Fall, dass jeweils eine der Sendeeinrichtungen eine Folge von Ethernet-Paketen, die Sendedaten-Teilblöcke für einen Sendedatenblock beinhalten, sendet und einer der PHY, der mit der Sendeeinrichtung verbunden ist, diese empfängt, aus den Nutzdatenblöcken der empfangenen Ethernet-Pakete die Sendedaten-Teilblöcke so in den Speicher schreibt, dass der Sendedatenblock wiederhergestellt wird.

Die Empfangseinrichtung kann die Zuordnung von Ethernet-Paketen zu einer Sendeeinrichtung dann beispielsweise dadurch geschehen, dass die Ethernet-Pakete in Abhängigkeit davon verarbeitet werden, über welchen PHY und damit von welcher der Sendeeinrichtungen diese Empfangen wurden. mit dem die Sendeeinrichtung verbunden ist, getrennt von denen verarbeitet werden, die Quelle eines Ethernet-Pakets, d. h. die Sendeeinrichtung dadurch ermitteln, über welche Ethernet-Schnittstelle, insbesondere welchen PHY, die Pakete empfangen wurden.

Die Verbindung der Sendeeinrichtungen mit der Empfangseinrichtung kann aber auch über einen Ethernet-Switch erfolgen. Bei dem System sind die Sendeeinrichtungen dann über Ethernet-Verbindungen mit einem Ethernet-Switch verbunden, der über eine Ethernet-Verbindung mit der Auswerteeinrichtung verbunden ist. Bei dem Verfahren kann in diesem Fall, aber auch im Fall einer Punkt-zu-Punkt-Verbindung, nach Empfang eines Ethernet-Pakets aus den Verwaltungsdaten ermittelt werden, von welcher der Sendeeinrichtungen das Ethernet-Paket versendet wurde, und in Abhängigkeit von dieser Ermittlung des Ethernet-Paket weiterverarbeitet werden.

Diese Ausführungsformen bzw. Weiterbildungen ermöglicht es insbesondere auch, größere Mengen von Sensordaten von wenigstens zwei Sensoren für das gleiche Wertdokument zu empfangen und gegebenenfalls in Abhängigkeit voneinander oder in Kombination miteinander auszuwerten.

Weiter kann die Empfangseinrichtung auch als erfindungsgemäße Sendeeinrichtung ausgebildet sein, wobei die Ethernet-Schnittstelle durch einen Abschnitt der Empfangsabschnitt gegeben ist, der auch als Ethernet-Schnittstelle der Sendeeinrichtung arbeitet. Insbesondere kann sie einen Sendepuffer zum wenigstens teilweisen und temporären Speichern von Daten der Sendedatenblöcke aufweisen, der beispielweise durch eine Teil des Speichers der Empfangseinrichtung gebildet sein kann, und dazu ausgebildet sein, ein erfindungsgemäßes Sendeverfahren ausführen, insbesondere aus einem Sendedatenblock in dem Sendepuffer eine Folge von Ethernet-Paketen zu bilden, die jeweils Verwaltungsdaten und einen aus dem jeweiligen Sendedatenblock gebildeten Sendedaten-Teilblock umfassen, so dass die Sendedaten-Teilblöcke der Ethernet-Pakete der Folge die Daten des Sendedatenblocks umfassen, wobei die Verwaltungsdaten Verwaltungsdaten umfassen, aus denen ermittelbar ist, ob eines der Ethernet-Pakete das letzte Ethernet-Paket der Folge ist, und die Ethernet-Pakete über die Ethernet-Schnittstelle zu versenden.

Für den Fall, dass die Empfangseinrichtung ein FPGA aufweist, ist dieses vorzugsweise zusätzlich so konfiguriert bzw. programmiert, dass es aus einem zu versendenden Sendedatenblock die Verwaltungsdaten und die Sendedaten-Teilblöcke für die jeweilige zu versendende Folge von Ethernet-Paketen bildet. Weiter wird ein PHY der Empfangseinrichtung vorzugsweise sowohl zum Empfangen als auch Senden von Ethernet-Paketen verwendet.

Weiterer Gegenstand der vorliegenden Erfindung ist ein System mit einer erfindungsgemäßen Sendeeinrichtung, vorzugsweise nach einem Ansprüche 8 bis 11, und einer über eine Ethernet-Verbindung mit der Sendeeinrichtung verbundene Empfangseinrichtung, vorzugweise nach einem der Ansprüche 12 bis 18.

Bei einer bevorzugten Weiterbildung kann das System wenigstens eine weitere Sendeeinrichtung aufweisen, die über eine Ethernet-Verbindung mit der Empfangseinrichtung verbunden ist. Dabei können gemäß einer Ausführungsform die Sendeeinrichtungen mit der Empfangseinrichtung über Punkt-zu-Punkt Ethernet-Verbindungen verbunden sein. Gemäß einer anderen Ausführungsform können die Sendeeinrichtungen über einen Ethernet-Switch mit der Empfangseinrichtung verbunden sein.

Bei einer bevorzugten Ausführungsform des Systems können die Sendeeinrichtung als Auswerteeinrichtung und die Empfangseinrichtung als Auswerteeinrichtung ausgebildet sein.

Weiterer Gegenstand der vorliegenden Erfindung ist eine Vorrichtung zur Bearbeitung von Wertdokumenten mit einer Zuführeinrichtung zur Zuführung von vereinzelten Wertdokumenten, einer Ausgabeeinrichtung zur Ausgabe bearbeiteter Wertdokumente, einer Transporteinrichtung zum Transportieren vereinzelter Wertdokumente von der Zuführeinrichtung zu der Ausgabeeinrichtung, einer Sensoreinrichtung zur Erfassung physikalischer Eigenschaften von der Transporteinrichtung transportierter Wertdokumente und Bildung von Sensordaten für das jeweilige Wertdokument, und einer über eine Ethernet-Verbindung mit der Sensoreinrichtung verbundenen Auswerteeinrichtung zur Auswertung der Sensordaten der Sensoreinrichtung und Steuerung der Transporteinrichtung in Abhängigkeit vom Ergebnis der Auswertung der Sensordaten, wobei die Sensoreinrichtung als erfindungsgemäße Sendeeinrichtung zur Übermittlung der Sensordaten für ein Wertdokument als Sendedatenblock und die Auswerteeinrichtung als erfindungsgemäße Empfangseinrichtung ausgebildet ist.

Unter Bearbeitung von Wertdokumenten wird dabei beispielsweise das Prüfen von Wertdokumenten in Bezug auf deren Denomination und/oder deren Echtheit und/oder deren Zustand und/oder das Sortieren und/der das Vernichten von Wertdokumenten verstanden.

Die Erfindung wird im Folgenden noch weiter beispielhaft an Hand der Zeichnungen erläutert. Es zeigen:
- Fig. 1: eine schematische Ansicht einer Banknotensortiervorrichtung;
- Fig. 2: eine schematische Darstellung eines ersten Beispiels für eine Sendeeinrichtung in Form einer Sensoreinrichtung und eine Empfangseinrichtung in Form einer Auswerteeinrichtung der Vorrichtung in Fig. 1,
- Fig. 3: eine schematische Darstellung zur Veranschaulichung einer Aufteilung eines Sendedatenblocks auf Ethernet-Pakete,
- Fig. 4: ein grob schematisches Ablaufdiagramm, das Sendeschritte eines ersten Beispiels für ein Verfahrens zur Übertragung eines Sendedatenblocks über eine Ethernet-Verbindung zeigt,
- Fig. 5: ein grob schematisches Ablaufdiagramm, das Empfangsschritte eines ersten Beispiels für ein Verfahrens zur Übertragung eines Sendedatenblocks über eine Ethernet-Verbindung zeigt,
- Fig. 6: ein grob schematisches Ablaufdiagramm, das Sendeschritte eines zweiten Beispiels für ein Verfahren zur Übertragung eines Sendedatenblocks über eine Ethernet-Verbindung zeigt,
- Fig. 7: ein grob schematisches Ablaufdiagramm, das Empfangsschritte des zweiten Beispiels für ein Verfahren zur Übertragung eines Sendedatenblocks über eine Ethernet-Verbindung zeigt,
- Fig. 8: eine schematische Darstellung eines zweiten Beispiels für eine Sendeeinrichtung in Form einer Sensoreinrichtung,
- Fig. 9: eine schematische Darstellung eines vierten Beispiels für eine Sendeeinrichtung in Form einer Sensoreinrichtung und eine Empfangseinrichtung in Form einer Auswerteeinrichtung,
- Fig.: 10eine schematische Darstellung eines Beispiels für ein System mit mehreren Sendeeinrichtungen in Form von Sensoreinrichtungen und einer Empfangseinrichtung in Form einer Auswerteeinrichtung, die über Punkt-zu-Punkt-Ethernet-Verbindungen miteinander verbunden sind,
- Fig. 11: eine schematische Darstellung eines Beispiels für ein System mit mehreren Sendeeinrichtungen in Form von Sensoreinrichtungen und einer Empfangseinrichtung in Form einer Auswerteeinrichtung, die über einen Ethernet-Switch miteinander verbunden sind,
- Fig. 12: eine schematische Darstellung eines Beispiels für ein System mit zwei über eine Ethernet-Verbindung miteinander verbundene Auswerteeinrichtungen,
- Fig. 13: eine schematische Darstellung eines Beispiels für ein System mit mehreren Sendeeinrichtungen in Form von Sensoreinrichtungen, einer zweiten Empfangseinrichtung in Form einer Auswerteeinrichtung und einer ersten Empfangseinrichtung in Form einer Auswerteeinrichtung, die über Punkt-zu-Punkt-Ethernet-Verbindungen miteinander verbunden sind,
- Fig. 14: eine schematische Darstellung eines Beispiels für ein System mit mehreren Sendeeinrichtungen in Form von Sensoreinrichtungen, einer zweiten Empfangseinrichtung in Form einer Auswerteeinrichtung und einer ersten Empfangseinrichtung in Form einer Auswerteeinrichtung, die über einen Ethernet-Switch miteinander verbunden sind, und
- Fig. 15: eine schematisches Blockdiagramm eines Abschnitt einer Empfangseinrichtung mit einem PHY und einem FPGA.

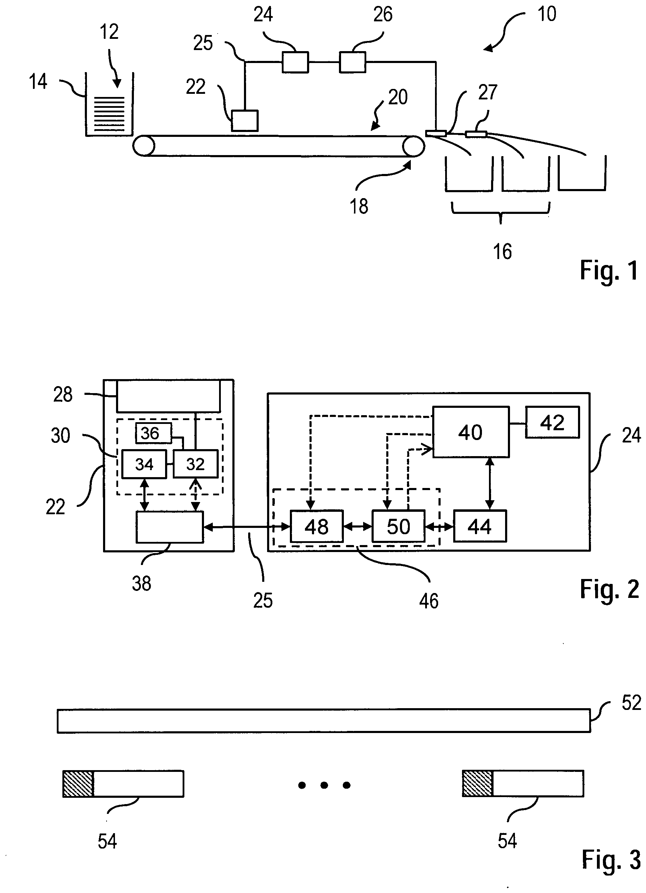

Eine Wertdokumentbearbeitungsvorrichtung 10 zur Bearbeitung von Wertdokumenten 12 in Fig. 1 weist einen Eingabeeinschnitt 14, einen Ausgabeabschnitt 16 und eine Transporteinrichtung 18 auf, mittels derer vereinzelte Wertdokumente 10 entlang eines durch die Transporteinrichtung 18 bestimmten Transportpfades 20 von dem Eingabeabschnitt 14 zu dem Ausgabeabschnitt 16 transportiert werden können.

An dem Transportpfad 20 ist eine Sensoreinrichtung 22 angeordnet, mittels derer physikalische Eigenschaften vorbeitransportierter einzelner Wertdokumente unter Bildung von Sensorrohdaten ermittelt werden können, die die Ergebnisse der Messung beschreiben. Im Beispiel umfasst die Sensoreirichtung 22 einen optischen Remissionssensor, mittels dessen ein digitales Bild eines vorbeitransportierten Wertdokuments erfasst werden kann.

Die Wertdokumentbearbeitungsvorrichtung 10 umfasst weiter eine Auswerteeinrichtung 24, die über eine Datenverbindung 25 mit der Sensoreinrichtung 22 verbunden ist, um von dieser Sensorrohdaten für ein Wertdokument zu empfangen und unter Bildung und Abgabe eines Auswertesignals für das Wertdokument auszuwerten; das Auswertesignal stellt dabei das Ergebnis der Auswertung dar. Mit der Auswerteeinrichtung 24 ist weiter eine Steuereinrichtung 26 verbunden, die jeweils das Auswertesignal der Auswerteeinrichtung 24 für ein Wertdokument empfängt und die Transporteinrichtung 18 in Abhängigkeit von dem empfangenen Auswertesignal ansteuert, so dass diese das Wertdokument in Abhängigkeit vom Ergebnis der Auswertung transportiert.

Der Eingabeabschnitt 14 umfasst ein Eingabefach zur Aufnahme eines Stapels von Wertdokumenten 12 und einen Vereinzeler, mittels dessen Wertdokumente eines Stapels in dem Eingabefach vereinzelt und der Transporteinrichtung 18 zugeführt werden.

Der Ausgabeabschnitt 16 umfasst wenigstens ein Ausgabefach, in diesem Beispiel mehrere Ausgabefächer, und in diesem Ausführungsbeispiel für jedes der Ausgabefächer ein in den Figuren nicht gezeigtes Staplerrad, mittels dessen von der Transporteinrichtung 18 zugeführte Wertdokumente in dem jeweiligen Ausgabefach abgelegt werden können.

Die Transporteinrichtung 18 ist so ausgebildet, dass sich der Transportpfad 20 in dem Bereich zwischen der Sensoreinrichtung und dem Ausgabeabschnitt 16 in so viele Zweige verzweigt, wie Ausgabefächer vorhanden sind. An den Verzweigungspunkten sind jeweils Weichen 27 angeordnet, die mittels Stellsignalen von der Steuereinrichtung 24 angesteuert werden. Beispielsweise können drei Ausgabefächer vorgesehen sein.

Die Auswerteinrichtung 24 ist über die Datenverbindung 25, eine Ethernet-Verbindung, mit der Sensoreinrichtung 22 verbunden. Sie ermittelt für ein jeweiliges Wertdokument aus den von der Sensoreinrichtung 22 für das Wertdokument erfassten Sensorrohdaten nach einem vorgegebenen Verfahren eine von mehreren vorgegebenen Sortierklassen, beispielsweise für als "echt, umlauffähig", "echt, nicht umlauffähig" oder "fälschungsverdächtig" klassifizierte Wertdokumente. Die Auswerteeinrichtung 24 bildet entsprechend der ermittelten Sortierklasse ein Auswertesignal, das die ermittelte Sortierklasse wiedergibt, und gibt dieses an die Steuereinrichtung 26 ab.

Die Steuereinrichtung 26 steuert in Abhängigkeit von dem Auswertesignale die Transporteinrichtung 18, insbesondere die Weichen, so mit Stellsignalen an, dass das Wertdokument in eines der Ausgabefächer transportiert wird, das für Wertdokumente der ermittelten Sortierklasse vorgesehen ist. Sie kann dazu einen Speicher und wenigstens einen Prozessor sowie wenigstens eine weitere Schnittstelle, mit der die Transporteinrichtung 20 über eine Signalverbindung verbunden ist, verfügen. In dem Speicher können Instruktionen eines Computerprogramms gespeichert sein, bei deren Ausführung der Prozessor die Auswertesignale empfängt und in Abhängigkeit von den empfangenen Auswertesignalen und gegebenenfalls weiterer Signale die Transporteinrichtung, beispielsweise deren Weichen ansteuert.

Zum Sortieren von Wertdokumenten in Form von Banknoten wird ein Stapel von Wertdokumenten 12 in den Eingabeabschnitt 14, im Beispiel genauer dessen Eingabefach, gelegt. Die Wertdokumente des eingelegten Stapels werden dann vereinzelt und an die Transporteinrichtung 18 übergeben, die die vereinzelten Wertdokumente einzeln zu dem Ausgabeabschnitt transportiert. Dabei passieren diese die Sensoreinrichtung 22, die während des Vorbeitransports physikalische Eigenschaften eines durch ihren Erfassungsbereich transportierten Wertdokuments erfasst und diese darstellende Sensorrohdaten bildet. Diese werden von der Sensoreinrichtung 22 als Sendeeinrichtung über die Ethernet-Leitung 25 an die Auswerteeinrichtung 24 als Empfangseinrichtung übertragen, die für das jeweilige Wertdokument eine Sortierklasse ermittelt und ein diese darstellendes Auswertesignal an die Steuereinrichtung 26 abgibt. Die Steuereinrichtung 26 steuert in Abhängigkeit von dem Auswertesignal die Transporteinrichtung 18, insbesondere die Weichen, so mit Stellsignalen an, dass das jeweilige Wertdokument in eines der Ausgabefächer transportiert wird, das für Wertdokumente der ermittelten Sortierklasse vorgesehen ist.

Besitzt der Remissionssensor eine hohe Ortsauflösung, beispielsweise im Bereich von 0,5 mm, so werden, insbesondere bei Transportgeschwindigkeiten von 25 Wertdokumenten/Sekunde und mehr, für transportierte Wertdokumente jeweils einem jeweiligen Wertdokument zugeordnete Sendedatenblöcke mit Sensorrohdaten erzeugt, die von der Sensoreinrichtung 22 für das Wertdokument erfasst wurden. Daher ist ein Strom von Sendedatenblöcken in Echtzeit an die Auswerteeinrichtung 24 zu übertragen, die diese Sendedatenblöcke empfangen und, ebenfalls in Echtzeit, auswerten muss.

Der Aufbau des Remissionssensors 22 ist, soweit die Signalverarbeitung betroffen ist, grob schematisch in Fig. 2 gezeigt.

Neben dem eigentlichen Detektor 28, der die optische Strahlung in elektrische Signale umsetzt, ist eine Datenvorverarbeitungseinrichtung 30, beispielsweise mit einem Controller oder Prozessor 32, einem Arbeitsspeicher 34 und einem nichtflüchtigem Speicher 36, in dem Instruktionen und/oder Konfigurationsdaten zur Ausführung durch die Datenvorverarbeitungsvorrichtung, beispielsweise den Controller bzw. Prozessor, vorhanden. Die Datenvorverarbeitungseinrichtung 30 ist mit dem Detektor 28 über eine Signalverbindung verbunden; sie wandelt die elektrischen Signale des Detektors 28, gegebenenfalls nach einer Vorverarbeitung, in Sensorrohdaten um. Weiter ist ein mit der Datenvorverarbeitungseinrichtung 30 mit einer Ethernet-Schnittstelle 38 verbunden, die einen Ethernet-Controller mit einem PHY umfasst. Die Datenvorverarbeitungseinrichtung 30 ist dazu ausgebildet, Sensorrohdaten in Sendedatenblöcken über die Ethernet-Schnittstelle 38 über die Ethernet-Verbindung 25 an die Auswerteeinrichtung 24 zu senden. Dies wird im Folgenden noch näher erläutert. Der Ethernet-Controller braucht keine speziellen Eigenschaften aufzuweisen. In diesem ersten Ausführungsbeispiel weist der Ethernet-Controller jedoch eine interne DMA-Funktionalität auf und ist dazu ausgebildet, Deskriptor-Listen selbständig abzuarbeiten. Die Datenverarbeitungseinrichtung braucht dann nur eine Deskriptor-Liste, die die Lage zu versendender Daten in dem Speicher bezeichnet, an den Ethernet-Controller zu senden. Dieser kann darauf direkt zugreifen, um die Ethernet-Pakete zu versenden.

Die Auswerteeinrichtung 24 ist mit ihren funktionalen Komponenten grob schematisch ebenfalls in Fig. 2 gezeigt.

Sie umfasst wenigstens einen Prozessor 40, einen ersten Speicher 42, einen zweiten Speicher, im Beispiel einen Arbeitsspeicher 44, und einen Empfangsabschnitt 46, der in diesem Ausführungsbeispiel eine Ethernet-Schnittstelle 48 mit einem Ethernet-Controller, der ein PHY umfasst, und ein FPGA 50 beinhaltet. Die Ethernet-Schnittstelle 48 dazu ausgebildet, mit einer Ethernet-Leitung, im Beispiel der Leitung 25, verbunden zu werden. Sie ist weiter mit dem FPGA 50 verbunden, so dass wenigstens ein Teil der Daten empfangener Ethernet-Pakete an das FPGA 50 weitergeleitet werden kann. Das FPGA 50 ist zum einen mit dem Arbeitsspeicher 44 und zum anderen mit dem Prozessor 40 über Signalverbindungen verbunden. Weitere Verbindungen bestehen zwischen dem Prozessor 40, dem FPGA 50 und der Ethernet-Schnittstelle 48. Diese Verbindungen sind entsprechend ihrer Funktion gezeichnet.

Die gestrichelten Pfeile mit gefüllter Spitze stehen für die Übertragung von Steuerdaten von dem wenigstens einen Prozessor 40 an das FPGA 50 bzw. die Ethernet-Schnittstelle 48, der gestrichelte Pfeil mit offener Spitze zeigt die Übermittlung eines Steuersignals, beispielsweise eines Interrupts, durch das FPGA 50 an den wenigstens einen Prozessor 40. Die durchgezogenen Pfeile repräsentieren den Datenfluss von Sensorrohdaten bzw. Sendedaten.

PHY steht für diejenige Ethernet-Komponente, die den Digitaldatenstrom in analoge Signale auf der Leitung umsetzt bzw. analoge Signale auf der Leitung in einen Digitaldatenstrom, beispielsweise kann es sich um einen "Physical Layer Transceiver chip" handeln. In diesem Ausführungsbeispiel ist der PHY der Auswerteeinrichtung als separater Baustein realisiert.

In dem Speicher 42 sind Instruktionen eines Computer-Programms gespeichert, bei deren Ausführung durch den Prozessor 40 die im Folgenden genannten Verfahrensschritte ausgeführt werden. Weiter ist in das FPGA 50 so konfiguriert bzw. programmiert, dass es die im Folgenden beschriebenen Verfahrensschritte ausführen kann. Insbesondere können in einem Speicherbereich des FPGA 50 entsprechende Instruktionen gespeichert sein.

Die Sensorrohdaten für ein jeweiliges Wertdokument müssen zum Auswerten in Echtzeit von der Sensoreinrichtung 22 als Sendeeinrichtung über die Ethernet-Verbindung 25 an die Auswerteeinrichtung 24 als Empfangseinrichtung übertragen werden. Die Sensorrohdaten für die jeweiligen Wertdokumente bilden Sendedatenblöcke, die übertragen werden. Die Übertragung der Sensorrohdaten für ein jeweiliges Wertdokument, das heißt eines Sendedatenblocks, erfolgt folgendermaßen.

In diesem Ausführungsbeispiel speichert die Datenverarbeitungseinrichtung 30, im Beispiel genauer deren Prozessor 32, für ein Wertdokument in ihrem Arbeitsspeicher 34 die ermittelten Sensorrohdaten in einem von ihr verwalteten Speicherbereich.

Die Sendeeinrichtung 22, insbesondere deren Datenverarbeitungseinrichtung 30 zusammen mit der Ethernetschnittstelle 38, bildet aus den Daten des jeweiligen Sendedatenblocks 52 eine Folge von Ethernet-Paketen 54, die dann über die Ethernet-Verbindung 25 an die Empfangseinrichtung, hier die Auswerteeinrichtung 24, gesendet werden. Der Sendedatenblock und die Ethernet-Pakete sind schematisch in Fig. 3 gezeigt.

Jedes der Ethernet-Pakete 54 enthält einen Sendedaten-Teilblock n der Sendedaten-Teilblöcke und zugehörige Verwaltungsdaten. Das Ethernet-Paket enthält die übliche Präambel und CRC-Prüfsumme, die beide in den Figuren nicht gezeigt sind.

Die Sendedaten-Teilblöcke sind aus wenigstens einem Teil der Sendedaten des Sendedatenblocks so gebildet, dass die Sendedaten-Teilblöcke der Ethernet-Pakete der Folge die Daten des Sendedatenblocks umfassen. Der Sendedaten-Teilblock NDₙ steht in dem für Nutzdaten vorgesehenen Block jedes der Ethernet-Pakete.

Die in Fig. 3 schraffiert gekennzeichneten, dem Sendedaten-Teilblock n zugeordneten Verwaltungsdaten Vₙ enthalten an den für Ethernet-Pakete vorgesehenen Positionen in dem jeweiligen Paket die klassischen Ethernet-Verwaltungsdaten: die Quelladresse, die Zieladresse und eine Typkennung. Die Verwaltungsdaten umfassen weiter Protokollverwaltungsdaten, die Übermittlungsinformationen der Ethernet-Pakete in Bezug auf die gebildete Folge und optional den Sendedatenblock enthalten bzw. darstellen.

Die Protokollverwaltungsdaten umfassen unter anderen Daten, aus denen ermittelbar ist, ob eines der Ethernet-Pakete das letzte Ethernet-Paket der Folge ist.

Im vorliegenden Beispiel werden als Protokollverwaltungsdaten, aus denen ermittelbar ist, ob ein jeweiliges Ethernet-Paket das erste oder das letzte Ethernet-Paket der Folge ist, eine Sequenzkennung in Form einer Sequenznummer und ein Ende-Bit verwendet. Die Sequenznummer wird beginnend mit 0 für das erste Ethernet-Paket für aufeinanderfolgend gebildete Ethernet-Pakete jeweils um 1 inkrementiert. Das Ende-Bit wird nur für das letzte Ethernet-Paket der Folge gesetzt, sonst ist es nicht gesetzt.

Weiter umfassen die Protokollverwaltungsdaten jedes der Ethernet-Pakete der Folge von Ethernet-Paketen für einen jeweiligen Sendedatenblock eine Sendedatenblock-Kennung, die den Sendedatenblock kennzeichnet; so sind Ethernet-Pakete für einen Sendedatenblock von solchen für einen anderen Sendedatenblock unterscheidbar. Für jedes der Ethernet-Pakete ist so ermittelbar, zu welchem Sendedatenblock es gehört bzw. Sendedaten welchen Sendedaten-Blocks es enthält.

In diesem Ausführungsbeispiel sind die Protokoll-Verwaltungsdaten für einen Sendedaten-Teilblock und der Sendedaten-Teilblock in einem Nutzdatenblock des Ethernet-Pakets gespeichert, dessen Größe standardmäßig vorgegeben ist. Ist anderen Ausführungsbeispielen könnten auch Ethernet-Pakete mit sogenannten Jumbo-Frames verwendet werden.

Nachdem gebildete Ethernet-Pakete über die Ethernetverbindung an die Empfangseinrichtung gesendet, und von dieser bzw. deren Empfangsabschnitt empfangen wurden, extrahiert die Empfangseinrichtung bzw. deren Empfangsabschnitt die Sendedaten-Teilblöcke aus den Nutzdatenblöcken der empfangenen Ethernet-Pakete für den jeweiligen der Sendedatenblöcke direkt in den Speicher schreibt, wobei der Empfangsabschnitt nicht bei jedem Schreiben eines der Ethernet-Pakete einen Interrupt an den Prozessor sendet.

Auf diese Weise werden in den Speicher der Empfangseinrichtung bzw. Auswerteeinrichtung 24 die Sendedaten-Teilblöcke geschrieben, so dass der Sendedaten-Block wiederhergestellt wird.

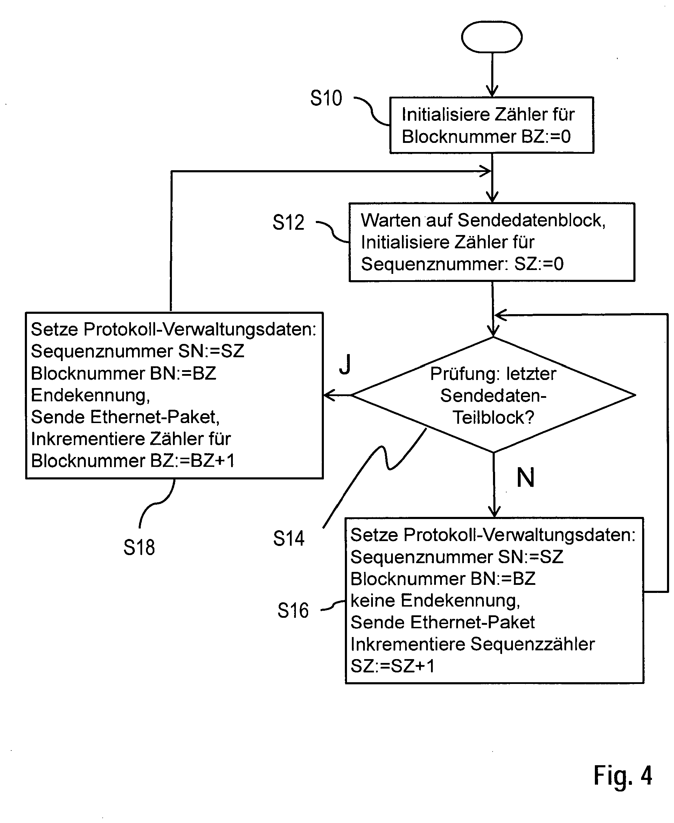

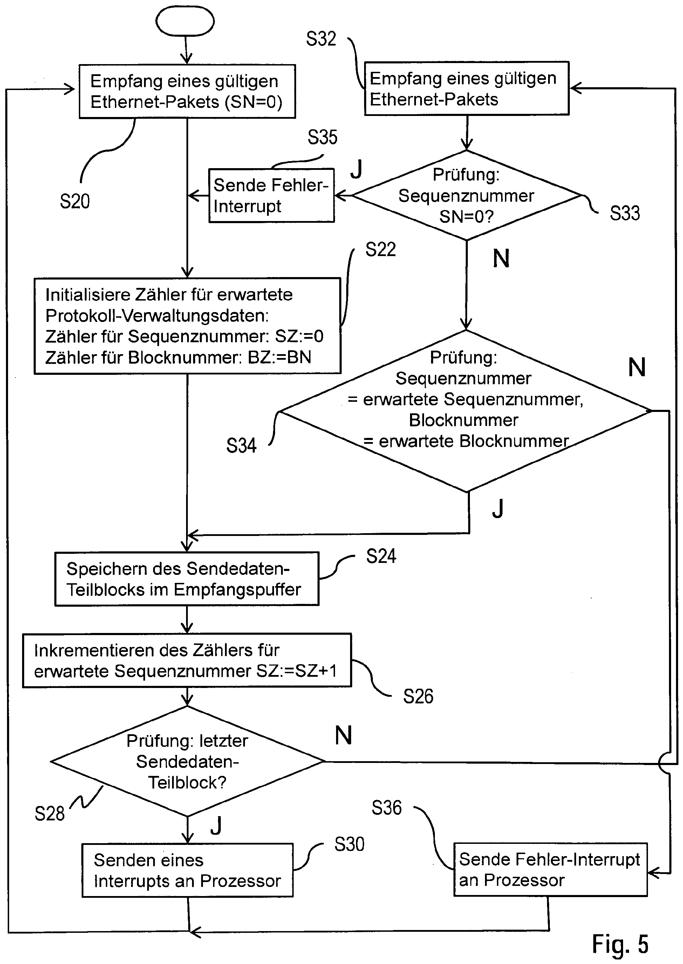

Genauer wird folgendes Verfahren für mehrere Folgen von Sendedatenblöcken durchgeführt, die nacheinander von der Sendeeinrichtung 22 über die Ethernet-Verbindung 25 an die Auswerteeinrichtung bzw. Empfangsseinrichtung 24 übertragen werden sollen. Die von der Sendeeinrichtung 22, genauer von der Datenverarbeitungseinrichtung 30 in Verbindung mit dem Ethernet-Controller 38 durchgeführten Sendeschritte des Verfahrens, d. h. das Sendeverfahren, sind in Fig. 4 schematisch dargestellt, die von der Empfangseinrichtung ausgeführten Empfangsschritte in Fig. 5. In dem nichtflüchtigen Speicher der Sendeeinrichtung sind hierzu entsprechende Instruktionen eines Computerprogramms gespeichert, bei deren Ausführung durch die Datenverarbeitungseinrichtung 30, im Beispiel deren Controller bzw. Prozessor 32, die Sendeschritte ausführt. Entsprechend ist das FPGA 50 so konfiguriert bzw. programmiert und sind in dem ersten Speicher 42 der Auswerteeinrichtung 24 Instruktionen eines Computerprogramms gespeichert, bei deren Ausführung durch den Prozessor die Empfangseinrichtung die Empfangsschritte ausführt.

Zu Beginn der Übertragung der Sendedatenblöcke wird in Schritt S10 eine Sendedatenblock-Kennung, hier eine Blocknummer BN, die den Sendedatenblock kennzeichnet und von anderen Sendedatenblöcken unterscheidet, initialisiert, d. h. auf einen Anfangswert, beispielsweise für einen ersten Sendedatenblock auf 0, gesetzt. Die Blocknummer kennzeichnet den Sendedatenblock und damit auch die Folge der Ethernet-Pakete, mit der der Sendedatenblock übertragen wird.

Die folgenden Schritte S12 bis S18 werden für jeden Sendedatenblock durchgeführt.

Es wird in Schritt S12 darauf gewartet, dass ein Sendedatenblock in dem Speicher gespeichert wird. Die Speicherung als Block bedeutet nicht unbedingt, dass die Daten in einem zusammenhängenden Speicherbereich gespeichert sind, jedoch ist dies vorzugsweise der Fall. Wenn die Datenvorverarbeitungseinrichtung 30 in ihrem Speicher 34 die Sensorrohdaten für das jeweilige Wertdokument als Sendedatenblock speichert, wird in Schritt S12 ein erster Sendedatenteilblock ermittelt und als Sequenzkennung eine Sequenznummer SZ auf einen Anfangswert, im Beispiel Null gesetzt. Die Sequenznummer SZ gibt die Reihenfolge der Sendedatenteilblöcke der Folge mit der Blocknummer BN wieder.

In Schritt S14 wird dann geprüft, ob der Sendedaten-Teilblock der letzte Sendedaten-Teilblock des Sendedaten-Blocks ist. Dazu wird geprüft, welche der Daten in dem Sendedatenblock noch nicht als Sendedaten-Teilblock verwendet und versendet wurden.

Ist dies nicht der Fall, wird in Schritt S16 ein Ethernet-Paket gebildet, das zum einen den Sendedaten-Teilblock und zum anderen neben den erwähnten klassischen Ethernet-Verwaltungsdaten als Protokollverwaltungsdaten als Sequenznummer SN die aktuelle Sequenznummer SZ und als Blocknummer BN die aktuelle Blocknummer BZ umfasst. Das Ende-Bit wird nicht gesetzt, da der Sendedaten-Teilblock der letzte Sendedaten-Teilblock des Sendedatenblocks ist. Das Ethernet-Paket wird mittels der Ethernet-Schnittstelle, im Beispiel des Ethernet-Controllers 38, an die Empfangseinrichtung 24 übermittelt und der Zähler SZ für die Sequenznummer inkrementiert, d. h. um 1 erhöht.

Als nächstes wird dann der Schritt S14 erneut für einen nächsten Sendedaten-Teilblock ausgeführt.

Wird in Schritt S12 festgestellt, dass der aktuelle Sendedaten-Teilblock der letzte Teilblock ist, wird in Schritt S18 ein Ethernet-Paket gebildet, das den Sendedaten-Teilblock und als Protokoll-Verwaltungsdaten für die aktuelle Sequenznummer SN den Stand des Sequenznummernzählers SZ, als Blocknummer BN den Stand des aktuellen Blocknummernzählers BZ und das nun gesetzte End-Bit umfasst. Das gebildete Ethernet-Paket wird gesendet und der Zähler für die Blocknummer BZ um 1 erhöht. Das Verfahren wird dann mit Schritt S12 fortgesetzt.

Schritt S12 wird dann mit dem nächsten Sendedatenblock durchgeführt.

Zum Empfang der gesendeten Ethernet-Pakete wird genauer folgendes Verfahren bzw. Empfangsverfahren von der Empfangseinrichtung 24 durchgeführt (vgl. Fig. 5).

Der Prozessor 40 stellt dem FPGA 50 einen oder mehrere Bereiche in dem Arbeitsspeicher 44 als Empfangspuffer zur Verfügung; die Größe dieser Bereiche entspricht der maximalen Größe eines Sendedatenblocks. Hierzu übermittelt er entsprechende Daten, beispielsweise Bereiche von Speicheradressen, an das FPGA50.

Wenn der Ethernet-Controller 48 zusammen mit seinem PHY aktiviert ist, empfängt dieser von der Sendeeinrichtung 22 kommende Ethernet-Pakete und leitet die empfangenen Ethernet-Pakete an das FPGA 50 weiter. Diese verwendet die Verwaltungsdaten, genauer die Protokoll-Verwaltungsdaten, um die Sendedaten-Teilblöcke der Folge von Ethernet-Paketen in Empfangspuffer 44 zu schreiben, so dass der Sendedatenblock wiederhergestellt wird, und erst nach Empfang aller Ethernet-Pakete einer Folge oder bei Auftreten eines Fehlers einen Interrupt an den Prozessor 40 zu senden.

Das eigentliche Empfangsverfahren zum Empfang eines Sendedatenblocks bzw. einer daraus gebildeten Folge von Ethernet-Paketen läuft folgendermaßen ab:
Zum Empfang eines neuen Sendedatenblocks wartet die Empfangseinrichtung 46, genauer das FPGA 50, in Schritt S20 bis sie bzw. es eine gültiges Ethernet-Paket empfängt, das den Beginn eines gültigen Sendedaten-Blocks darstellt. Die Prüfung auf die Gültigkeit der Ethernet-Blöcke umfasst die Prüfungen ob die Ethernet-Blöcke Ethernet-Blöcke ohne CRC-Fehler, mit passender Zieladresse und mit passender Länge sind. Weiter prüft es, ob die Verwaltungsdaten des eingetroffenen Ethernet-Blocks eine Sequenzkennung aufweist, die einen Start-Block kennzeichnet. Im Beispiel prüft es, ob die Verwaltungsdaten die Sequenznummer SN=0 enthalten. In anderen Ausführungsbeispielen kann zusätzlich geprüft werden, ob die Blocknummer auf der Seite der Empfangseinrichtung noch nicht verwendet wurde.

In Schritt S22 werden aus dem ersten Ethernet-Paket als Verwaltungsdaten die Sendedaten-Blocknummer BN und die Sequenznummer SN gelesen. Interne Zähler SZ bzw. BZ für die als nächstes zu erwartende Sequenznummer werden auf Null bzw. für die als nächstes zu erwartende Sendedaten-Blöcke werden auf BN gesetzt.

In Schritt S24 überträgt das FPGA 50 die Daten des Sendedaten-Teilblocks dieses Ethernet-Pakets in den Empfangspuffer und speichert diese entsprechend der Sequenznummer. Beispielsweise kann es den Sendedaten-Teilblock an gegebenenfalls zuvor gespeicherte Sendedaten-Teilblöcke desselben Sendedatenblocks bzw. derselben Folge von Ethernet-Paketen anhängen.

In Schritt S26 wird der interne Zähler SZ um 1 inkrementiert.

In Schritt S28 erfolgt dann anhand der Verwaltungsdaten, genauer der Protokoll-Verwaltungsdaten, eine Prüfung, ob das empfangene Ethernet-Paket in seinen Nutzdaten den letzten Sendedaten-Teilblock der Folge der Ethernet-Pakete für den aktuellen Sendedaten-Block enthält. Dazu wird das Vorhandensein des Ende-Bits geprüft.

Ist dies der Fall, wird in Schritt S30 der Empfangspuffer an den Prozessor 40 übergeben, indem das FPGA 50 an diesen einen Interrupt sendet.

Der Prozessor 40 kann nun die Daten in dem Empfangspuffer verwenden. Im Wesentlichen gleichzeitig, vorzugsweise vor der Verwendung, stellt er dem FPGA 50 einen neuen Empfangspuffer, also einen oder mehrere andere Bereiche des Arbeitsspeichers 44 zur Verfügung. Die Gesamtgröße der Bereiche entspricht der zu Anfang der Datenübertragung. Der Empfang wird dann neu aufgesetzt und als nächstes Schritt S20 für einen weiteren zu empfangenden Sendedatenblock ausgeführt.

Wurde in Schritt S28 dagegen erkannt, dass das aktuelle Ethernet-Paket nicht das letzte der Folge der Ethernet-Pakete für den aktuellen Sendedaten-Block ist, wartet der Empfangsabschnitt 38, insbesondere das FPGA 50, in Schritt S32 wie in Schritt S22 auf einen gültigen Ethernet-Block und empfängt diesen.

In dem folgenden Schritt S33 wird von dem Empfangsabschnitt, im Beispiel genauer dem FPGA 50, geprüft, ob ein erstes Ethernet-Paket für einen Sendedatenblock empfangen wurde, ob wohl der letzte Sendedaten-Teilblock des vorhergehenden Sendedatenblock noch nicht empfangen wurde. Dazu wird geprüft, ob das empfangene Ethernet-Paket das erste einer Folge von Ethernet-Paketen für einen Sendedatenblock ist, indem geprüft wird, ob die Sequenznummer 0 ist. Diesen Wert kann die Sequenznummer an dieser Stelle des Verfahrens bei vollständig empfangenen Sendedatenblöcken nicht annehmen, sondern nur in Schritt S20.

Ist die Sequenznummer 0, wird daher in Schritt S35 eine Fehlermeldung in Form eines Fehler-Interrupts erzeugt, der an den Prozessor 40 gesendet wird. Dieser zeigt an, dass der bisher nur teilweise empfangene Sendedatenblock nur unvollständig war. Da aber bereits ein erstes Ethernet-Paket für einen neuen Sendedatenblock empfangen wurde, wird das Verfahren mit Schritt S22 fortgesetzt. Die empfangenen Sendedaten-Teilblöcke, die keinen vollständigen Sendedatenblock ergeben, werden dann verworfen. Der Prozessor 40 kann je nach Umständen den Sendedatenblock dann nochmals anfordern.

Andernfalls wird das Verfahren mit Schritt D34 fortgesetzt.

In Schritt S34 prüft das FPGA 50 anhand der Verwaltungsdaten, genauer der Protokoll-Verwaltungsdaten, in dem Ethernet-Paket, ob dieses Paket das nächste zu erwartende Paket ist, im Beispiel das nächste in der Folge ist. Genauer prüft es, ob die Sequenzkennung SN in den Verwaltungsdaten gleich dem internen Zähler SZ ist und ob die Sendedatenblock-Kennung BN der in Schritt S22 erfassten Sendedaten-Blocknummer entspricht.

Ist dies der Fall, setzt das FPGA 50 das Verfahren mit Schritt S24 fort.

Entspricht das Paket nicht der Erwartung, d. h. ergibt eine Prüfung bzw. eine der Prüfungen in Schritt S34 keine Übereinstimmung, wird in Schritt S36 eine Fehlermeldung in Form eines Fehler-Interrupts erzeugt, der an den Prozessor 40 gesendet wird. Das Verfahren wird dann mit Schritt S20 fortgesetzt. Die empfangenen Sendedaten-Teilblöcke werden dann verworfen. Der Prozessor 40 fordert den Sendedatenblock dann nochmals an.

Auf diese Weise schreibt der Empfangsabschnitt 46 die Sendedaten-Teilblöcke so in den Empfangspuffer 44, dass der Sendedatenblock wiederhergestellt wird. Dabei wird beim Empfang aller Ethernet-Pakete für einen Sendedatenblock nur am Ende, im Beispiel im Schritt S30, ein Interrupt an den Prozessor 40 gesendet, sofern kein Fehler auftritt. Der Empfangsabschnitt 46, genauer der Prozessor 40, kann dann an das FPGA 50 ein Signal senden, mit dem er diesem die Lage des Empfangspufferbereichs für den nächsten zu empfangenen Sendedatenblock mitteilt, das Verfahren wird mit Schritt S20 fortgesetzt. Große Sendedatenblöcke können daher mit geringer Belastung des Prozessors durch Interrupts beim Empfang der Folge von Ethernet-Paketen empfangen werden. Werden nacheinander Sendedatenblöcke, beispielsweise für zwei aufeinanderfolgende Wertdokumente, übertragen, kann der Prozessor 40 in der Zeit nach dem Interrupts nach Ende des Empfangs des ersten der Sendedatenblöcke, weitere Aufgaben, beispielsweise die wenigstens teilweise Auswertung wenigstens eines Teil des empfangenen Sendedatenblocks, ohne Störung durch einen Interrupt und damit schnell ausführen.

Der Empfangsabschnitt 46, genauer das FPGA 50 ist weiter vorzugsweise so ausgebildet, dass der Prozessor 40 mittels der Empfangseinrichtung 24 mittels der Ethernet-Schnittstelle 48 Daten über die Ethernet-Verbindung 25 versenden kann.

Ein zweites Ausführungsbeispiel unterscheidet sich von dem ersten Ausführungsbeispiel bzw. der beschriebenen Variante darin, dass die Sendeeinrichtung für einen bzw. denselben Sendedaten-Teilblock wenigstens zwei, im Beispiel drei, Ethernet-Pakete erzeugt und an die Empfangseinrichtung übermittelt. Die Empfangseinrichtung empfängt die Ethernet-Pakete und speichert für Ethernet-Pakete mit demselben Sendedaten-Teilblock, den Sendedaten-Teilblock wenigstens einmal, so dass insgesamt der Sendedatenblock wiederhergestellt wird, auch wenn eines der Ethernet-Pakete nicht empfangen oder nur beschädigt empfangen wird.

Die Sendeeinrichtung und die Empfangseinrichtung unterscheiden sich von der Sendeeinrichtung bzw. der Empfangseinrichtung des ersten Ausführungsbeispiels nur durch die Instruktionen des Computerprogramms in dem Speicher 34 der Sendeeinrichtung bzw. die Ausbildung des Empfangsabschnitts 46, im Beispiel der Konfiguration bzw. Programmierung des FPGA 50 der Empfangseinrichtung 24.

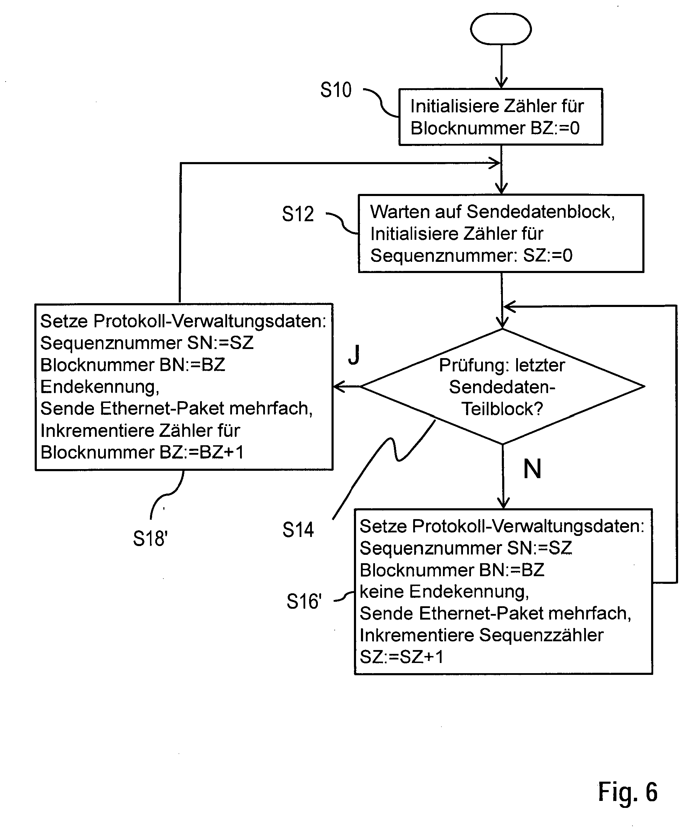

Die Instruktionen des Computerprogramms in dem Speicher 34 der Sendeeinrichtung sind lediglich dahingehend modifiziert, dass bei deren Ausführung das in Fig. 6 veranschaulichte Sendeverfahren durchgeführt wird. Das Sendeverfahren unterscheidet sich von dem Sendeverfahren des ersten Ausführungsbeispiels lediglich darin, dass der Schritt S16 durch einen Schritt S16' und der Schritt S18 durch einen Schritt S18' ersetzt ist. In Schritt S16' wird im Unterschied zu dem ansonsten gleichen Schritt S16 für einen Sendedaten-Teilblock mehr als ein Ethernet-Paket, im Beispiel drei Ethernet-Pakete, versendet. In Schritt S18' wird entsprechend im Unterschied zu dem ansonsten gleichen Schritt S18 für den letzten Sendedaten-Teilblock mehr als ein Ethernet-Paket, im Beispiel soviele Ethernet-Pakete wie in Schritt S16', also hier drei, Ethernet-Pakete versendet. Die Ethernet-Pakete für denselben Sendedatenblock enthalten dabei die gleichen Daten, also Verwaltungsdaten und den jeweiligen Sendedatenblock.

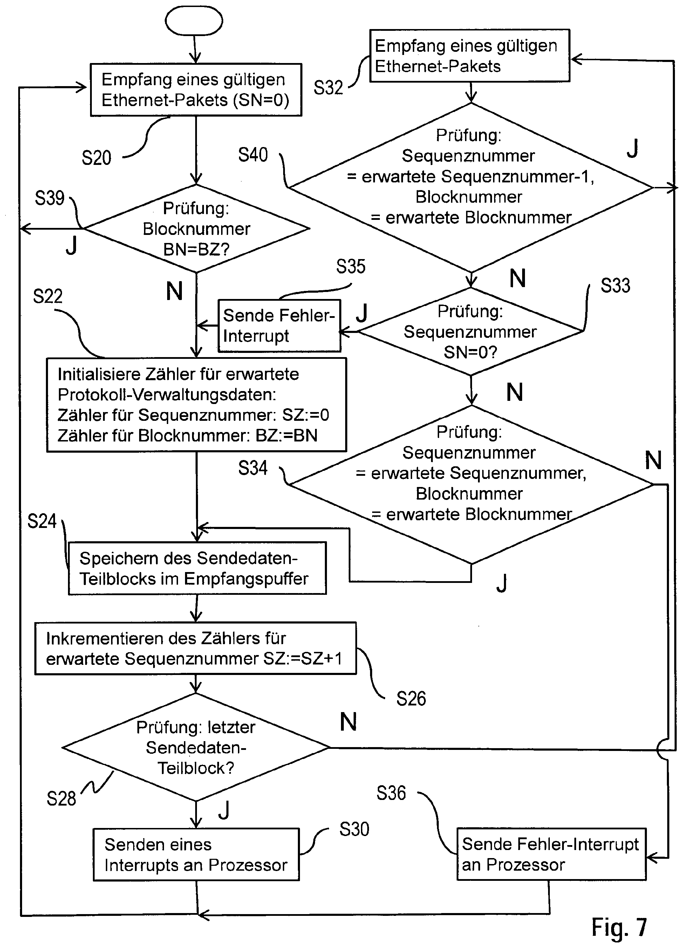

Der Empfangsabschnitt unterscheidet sich von dem Empfangsabschnitt 46 lediglich durch die Konfiguration bzw. Programmierung des FPGA 50. Das FPGA, genauer dessen Konfiguration bzw. Programmierung ist gegenüber dem FPGA 50 so modifiziert, dass es aus mittels des Sendeverfahrens übermittelten Ethernet-Paketen für einen Sendedatenblock diesen wiederherstellen kann, wozu vorzugsweise das in Fig. 7 veranschaulichte Empfangsverfahren durchgeführt wird. Das Empfangsverfahren unterscheidet sich von dem Empfangsverfahren des ersten Ausführungsbeispiels durch einen, im Beispiel von dem FPGA ausgeführten, Schritt S39, der nach dem Schritt S20 ausgeführt wird und einen Schritt S40, der nach dem Schritt S32 ausgeführt wird. Ansonsten unterscheiden sich die Empfangsverfahren nicht voneinander.

Der Schritt S39 dient dazu, den Versand von Sendedatenblöcken zu behandeln, die in nur ein Ethernet-Paket passen, d. h. zu deren Versand die Folge von Ethernet-Paketen nur ein Ethernet-Paket umfasst. In Schritt S20 wird allgemein ein erstes Ethernet-Paket einer Folge von Ethernet-Paketen für einen Sendedatenblock empfangen. Im Verlauf der folgenden Schritte, im Beispiel in Schritt S22, wird, wie im ersten Ausführungsbeispiel der Zähler für die Blocknummer auf die Blocknummer des empfangenen ersten Pakets der Folge gesetzt. Da im Fall einer Folge mit nur einem Ethernet-Paket das erste Ethernet-Paket auch das letzte ist, wird das Verfahren mit Schritt S20 fortgesetzt. Wird dieses Paket mehrfach gesendet, folgen also erste Pakete (SN=0) mit gleicher Blocknummer. Dies kann an dieser Stelle des Verfahrens nur auftreten, wenn ein solches Paket zum zweiten Mal empfangen wurde. Es muss daher verworfen werden. In Schritt S39 wird daher nach Schritt S20 geprüft, ob die Blocknummer des ersten Ethernet-Pakets der Folge dem Wert BZ des Zählers für Blocknummern entspricht, die zuvor bei der Verarbeitung wenigstens eines empfangenen Ethernet-Pakets gespeichert wurde. Ist dies der Fall, wurde der Ethernet-Block, wie oben ausgeführt, schon empfangen und das Verfahren wird mit Schritt S20 fortgesetzt, ohne dass der Sendedatenteilblock darin nochmals gespeichert wird. Andernfalls, d. h. wenn die Blocknummer BN des empfangenen Ethernet-Pakets nicht mit dem zuletzt gesetzten Wert BZ des Zählers für Blocknummern übereinstimmt, wird das Verfahren mit Schritt S22 fortgesetzt. Wurde noch kein Sendedatenblock empfangen, kann der Wert von BZ auf einen Wert gesetzt werden, der keinem in diesem Stadium möglichen Wert der bei dem Verfahren möglichen Blocknummern entspricht, so dass nicht zufällig fälschlich Ethernet-Pakete für einen Sendedatenblock mit nur einem Sendedaten-Teilblock verworfen wird.

Es folgen dann die Schritte S22 bis S32, die wie im ersten Ausführungsbeispiel ausgeführt werden.

Nach Empfang eines gültigen Ethernet-Pakets in Schritt S32 wird in Schritt S40 geprüft, ob ein empfangenes Ethernet-Paket das erste Ethernet-Paket für einen gegebenen Sendedatenblock und einen gegebenen Sendedaten-Teilblock ist oder nicht.

Dazu wird geprüft, ob die Blocknummer der erwarteten Blocknummer entspricht, d. h. das Paket denselben Sendedatenblock betrifft. Weiter wird geprüft, ob die in den Verwaltungsdaten enthaltene Sequenzkennung der erwarteten Sequenznummer -1 entspricht. Da in Schritt S26 bei erfolgreichem Speichern eines Sendedaten-Teilblocks der Zähler für die erwartete Sequenznummer inkrementiert wird, ist in dem Fall, dass die in den Verwaltungsdaten enthaltene Sequenzkennung SN der erwarteten Sequenznummer -1, d. h. SZ-1, entspricht, der Sendedaten-Teilblock bereits in einem vorhergehenden Schritt (S24) bereits gespeichert worden, so dass das Ethernet-Paket nicht weiter behandelt wird. Vielmehr wird in Schritt S32 ein weiteres gültiges Ethernet-Paket empfangen.

Entspricht dagegen die in den Verwaltungsdaten enthaltene Sequenznummer SN dem Wert des Zählers SZ für die erwartete Sequenzkennung, so wurde ein erstes der wenigstens zwei, im Beispiel drei versandten Ethernet-Pakete für einen Sendedaten-Teilblock empfangen, das gültig ist. Das Verfahren wird dann für diesen Sendedaten-Teilblock wie im ersten Ausführungsbeispiel mit Schritt S33 fortgesetzt. Geht daher wenigstens eines der drei Ethernet-Pakete bei der Übertragung nicht verloren und ist nicht ungültig, wird der Sendedaten-Teilblock sicher übertragen.

Ansonsten läuft das Verfahren wie im ersten Ausführungsbeispiel ab.

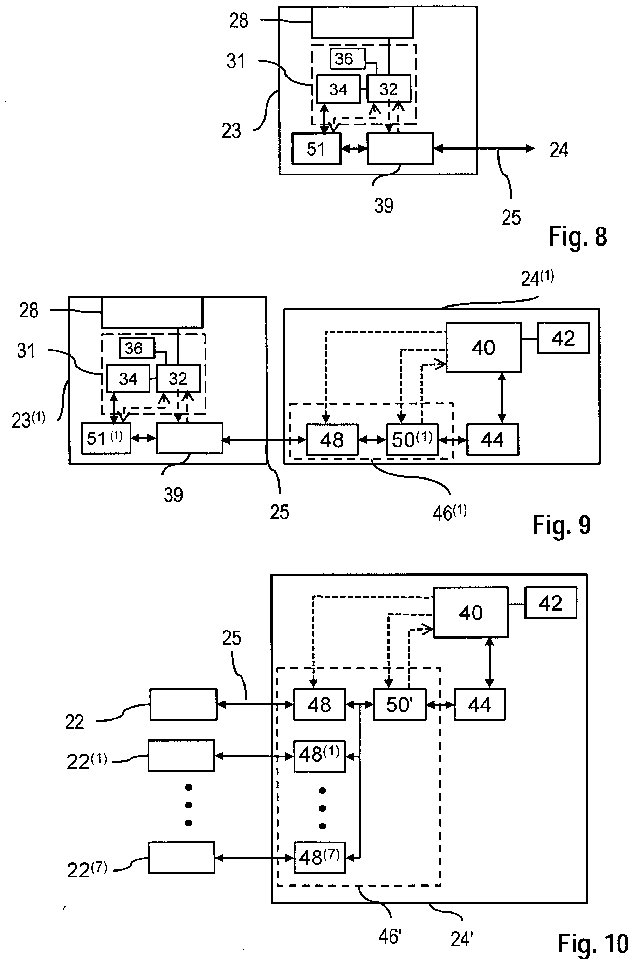

Ein drittes Ausführungsbeispiel unterscheidet sich von dem ersten Ausführungsbeispiel lediglich durch die Ausbildung der Sendeeinrichtung. Die Sendeeinrichtung verfügt über ein FPGA, das die Folge von Ethernet-Paketen für einen gegebenen Sendedatenblock bildet und über die Netzwerkschnittstelle 38 versendet. Fig. 8 zeigt grob schematisch die Sendeeinrichtung 23 in einer Darstellung, in der die Pfeile wie in Fig. 2 in Bezug auf die Empfangseinrichtung 24 zu verstehen sind. Die Sendeeinrichtung 23 unterscheidet sich von der Sendeeinrichtung 22 des ersten Ausführungsbeispiels zum einen durch die Ausbildung der Datenverarbeitungseinrichtung 31, in der, beispielsweise in dem Speicher 36, Instruktionen eines Computerprogramms gespeichert sind, bei deren Ausführung durch den Prozessor in Verbindung mit dem FPGA 51 das im Folgenden beschriebene Sendeverfahren durchgeführt wird. Ansonsten entspricht die Datenverarbeitungseinrichtung 31, bis auf die Verbindungen mit dem FPGA 51, der Datenverarbeitungseinrichtung 30 des ersten Ausführungsbeispiels.

Weiter ist nun das FPGA 51 vorgesehen, das über Steuer- und Datenverbindungen mit der Datenverarbeitungseinrichtung 31, insbesondere mit dem Prozessor 32 bzw. mit dem Arbeitsspeicher 34, verbunden ist. Darüber hinaus ist es mit dem Ethernet-Controller 39 verbunden, der sich von dem Ethernet-Controller 32 dadurch unterscheidet, dass er in diesem Ausführungsbeispiel keine DMA-Funktionalität aufweist.

Die anderen Komponenten der Sendeeinrichtung 23 unterscheiden sich nicht von denen der Sendeeinrichtung 22 des ersten Ausführungsbeispiels. Das FPGA 51 ist dazu konfiguriert bzw. programmiert, im Zusammenspiel mit der Datenverarbeitungseinrichtung 31 das folgende Verfahren durchzuführen.

Bei der Erfassung der Sensorrohdaten stellt die Datenverarbeitungseinrichtung 31, genauer deren Prozessor 32, die Daten als Sendedatenblock in einem als Sendepuffer dienenden Bereich des Arbeitsspeichers 34 zusammen und übergibt diesen - durch Übermittlung von den Bereich beschreibenden Daten - an das FPGA 51.

Das FPGA 51 führt dann folgende Schritte aus, die denen des Sendeverfahrens des ersten Ausführungsbeispiels entsprechen. Nach Empfang der den Bereich beschreibenden Daten stellt es für jeweils einen Sendedaten-Teilblock die Verwaltungsdaten wie im ersten Ausführungsbeispiel zusammen und übergibt diese zusammen mit dem jeweiligen Sendedaten-Teilblock an den Ethernet-Controller 39, der diesen versendet.

Wenn der letzte Sendedaten-Teilblock versandt worden ist, gibt das FPGA 51 einen Interrupt an die Datenverarbeitungseinrichtung 31, im Beispiel genauer den Prozessor 32, der signalisiert, dass das Senden des Sendedatenblocks beendet ist.

Nach Erhalt des Interrupts kann die Datenverarbeitungseinrichtung 31, genauer deren Prozessor, die Daten des nächsten Sendedatenblocks in den Sendepuffer übertragen, oder, in anderen Varianten, nur entsprechende die Lage in dem Arbeitsspeicher 34 beschreibende Daten erzeugen und an das FPGA 51 übermitteln.

Weitere Ausführungsbeispiele unterscheiden sich von den beschriebenen Ausführungsbeispielen dadurch, dass die Empfangseinrichtung jeweils auch so ausgebildet ist, dass sie eine Sendeeinrichtung darstellt. Dazu ist das FPGA jeweils so konfiguriert bzw. programmiert und verfügt die Empfangseinrichtung 24 über Instruktionen in dem Speicher 42, bei deren Ausführung der Prozessor in Verbindung mit dem Empfangsabschnitt das in den vorhergehenden Ausführungsbeispielen beschriebene Sendeverfahren durchführt, wobei der Speicher 44, genauer ein entsprechender Bereich des Speichers 44, dem Sendepuffer bzw. Speicher 34 entspricht, in dem der zu versendende Sendedatenblock gespeichert ist. Weiter ist das FPGA wie das FPGA 50 konfiguriert bzw. programmiert und zusätzlich so, dass es wie das FPGA 51 arbeitet, d.h. zusammen mit dem Prozessor die Schritte ausführt, die denen des Sendeverfahrens des ersten Ausführungsbeispiels entsprechen. In einer Variante könnte es auch die Schritte ausführen, die denen des Sendeverfahrens des zweiten Ausführungsbeispiels entsprechen.

Bei einem solchen, vierten Ausführungsbeispiel in Fig. 9 ist die Sendeeinrichtung 23⁽¹⁾ gegenüber der Sendeeinrichtung 23 des dritten Ausführungsbeispiels nur insoweit verändert, als sie dazu ausgebildet ist, auch Sendedatenpakete analog zu der Empfangseinrichtung zu empfangen. Dazu ist das Programm für den Prozessor 32 so geändert und das FPGA 51⁽¹⁾ zusätzlich so programmiert bzw. konfiguriert, dass es in Verbindung mit der Ethernet-Schnittstelle 39, dem Speicher 34 und dem Prozessor 32 die Schritte des Empfangsverfahrens des dritten Ausführungsbeispiels ausführt. Die Auswerte- bzw. Empfangseinrichtung 24 ist durch eine Auswerte- bzw. Empfangseinrichtung 24⁽¹⁾ ersetzt, die gegenüber der Empfangseinrichtung 24 zusätzlich so ausgebildet ist, dass sie jeweils auch eine Sendeeinrichtung darstellt. Dazu ist das FPGA 50⁽¹⁾ jeweils zusätzlich so konfiguriert bzw. programmiert und verfügt die Empfangseinrichtung 24⁽¹⁾ über solche Instruktionen in dem Speicher 42, dass bei Ausführung der Instruktionen der Prozessor in Verbindung mit dem Empfangsabschnitt 46⁽¹⁾ das in den vorhergehenden Ausführungsbeispielen beschriebene Sendeverfahren durchführt, wobei der Speicher 44, genauer ein entsprechender Bereich des Speichers 44, dem Sendepuffer bzw. Speicher 34 entspricht, in dem der zu versendende Sendedatenblock gespeichert ist. Ansonsten unterscheidet sich der Empfangsabschnitt 46⁽¹⁾ nicht von dem Empfangsabschnitt 46. Das FPGA 50⁽¹⁾ ist daher wie das FPGA 50 konfiguriert bzw. programmiert und zusätzlich so, dass es wie das FPGA 51 arbeitet, d.h. zusammen mit dem Prozessor die Schritte ausführt, die denen des Sendeverfahrens des ersten Ausführungsbeispiels entsprechen. In einer Variante könnte es auch die Schritte ausführen, die denen des Sendeverfahrens des zweiten Ausführungsbeispiels entsprechen.

In einem fünften und sechsten Ausführungsbeispiel verarbeitet die Empfangseinrichtung 24, im Beispiel Auswerteeinrichtung, Sensorrohdaten für Wertdokumente von wenigstens zwei verschiedenen Sensoreinrichtungen, die über Ethernet-Verbindungen mit der Auswerteeinrichtung verbunden sind.

In dem in Fig. 10 schematisch veranschaulichten fünften Ausführungsbeispiel sind die wenigstens zwei Sensoreinrichtungen, im Beispiel acht Sensoreinrichtungen 22, 22⁽¹⁾, ..., 22⁽⁷⁾, über Punkt-zu-Punkt-Ethernet-Verbindungen 25 mit einer Auswerteeinrichtung 24' verbunden. Im Beispiel handelt es sich bei den Ethernet-Verbindungen um 1Gbit-Ethernet-Verbindungen.

Die Sensoreinrichtungen 22, 22⁽¹⁾, ..., 22⁽⁷⁾ sind, soweit die Übertragung der jeweiligen Sensorrohdaten betroffen sind, wie die Sensoreinrichtung des ersten Ausführungsbeispiels ausgebildet. Lediglich die Einrichtung zur Erfassung der physikalischen Eigenschaften, entsprechend dem Detektor 28, und die den Sensordaten entsprechende Programmierung des Prozessors können anders sein. Beispielsweise kann wenigstens ein der Sensoreinrichtungen einen anderen optische Sensor oder einen ortsauflösenden Magnetsensor oder einen ortsauflösenden Ultraschallsensor enthalten. Jede der Sensoreinrichtungen führt das im Zusammenhang mit dem ersten Ausführungsbeispiel beschriebene Sendeverfahren aus.

Die Auswerteeinrichtung 24' unterscheidet sich von der Auswerteeinrichtung 24 zum einen dadurch, dass der Empfangsabschnitt 46 durch einen Empfangsabschnitt 46' ersetzt ist. Dieser unterscheidet sich von dem Empfangsabschnitt 46' erstens dadurch, dass dieser wenigstens zwei, im Beispiel 8 Netzwerkschnittstellen 48, 48⁽¹⁾, ..., 48⁽⁷⁾ mit jeweils einem PHY aufweist. Jeweils eine der Sensoreinrichtungen 22, 22⁽¹⁾, ..., 22⁽⁷⁾ ist über eine getrennte Ethernet-Verbindung mit einer der Sensoreinrichtungen entsprechenden PHY über eine 1-GBit-Ethernet-Verbindung verbunden. Die Netzwerkschnittstellen sind mit einem FPGA 50' verbunden, das zur Ausführung entsprechender Schritte des nachfolgend beschriebenen Verfahrens ausgebildet ist. In Fig. 10 ist der Übersichtlichkeit halber von den Steuerverbindungen von dem Prozessor 40 zu den Netzwerkschnittstellen nur die von dem Prozessor 40 zu der Netzwerkschnittstelle 48 gezeigt.

In diesem Ausführungsbeispiel können die Netzwerkschnittstellen neben dem PHY auch jeweils einen Ethernet-Controller enthalten, der mit dem FPGA 50' verbunden ist.

Das FPGA 50' ist wie im ersten Ausführungsbeispiel über eine Datenverbindung mit dem Arbeitsspeicher 44 und über Steuerverbindungmit dem Prozessor 40 verbunden.

Die Empfangseinrichtung bzw. Auswerteeinrichtung 24' unterscheidet sich von der Auswerteeinrichtung 24 des ersten Ausführungsbeispiels weiter dadurch, dass die Instruktionen in dem Speicher 42 geändert sind und Instruktionen enthalten, bei deren Ausführung der Prozessor 40, für jede der Sendeeinrichtungen bzw. Sensoreinrichtungen einen Empfangspufferbereich zur Verfügung stellt und diesen in Abhängigkeit von entsprechenden Steuersignalen des FPGA 50' verwendet. Insbesondere führt er dann jeweils Schritte analog zu denen des ersten Ausführungsbeispiels aus. Weiter enthalten die Instruktionen Instruktionen, bei deren Ausführung unter anderem die empfangenen Sendedatenblöcke ausgewertet werden.

Das FPGA 50' ist derart ausgebildet und insbesondere konfiguriert und/oder programmiert, dass es eine der Anzahl der Sendeeinrichtungen, im Beispiel Sensoreinrichtungen, entsprechende Anzahl von Empfangspufferbereichen simultan bearbeiten kann, wobei für jede Verbindung zwischen einer der Sendeeinrichtungen und der Auswerteeinrichtung ein eigener Satz an Verwaltungsdaten geführt wird. Das FPGA 50' ist weiter derart ausgebildet und insbesondere programmiert, dass es die von den Sensoreinrichtungen gesendeten, eintreffenden Ethernet-Teilblöcke anhand der Ethernet-Quelladresse dem zugehörigen Empfangspuffer und den zugehörigen Verwaltungsdaten zuordnet und diese jeweils entsprechend dem ersten Ausführungsbeispiel auswertet.

Zum Senden führt jede der Sensoreinrichtungen als Sendeeinrichtung die Schritte eines Sendeverfahrens aus, wie es im ersten Ausführungsbeispiel beschrieben ist. Die Verwaltungsdaten der Ethernet-Pakete zur Übermittlung eines Sendedatenblocks einer der Sensoreinrichtungen bzw. Sendeeinrichtungen sind durch einen gleiche, die Sensoreinrichtung kennzeichnende MAC-Adresse gekennzeichnet.

Das von der Auswerteeinrichtung 46' als Empfangseinrichtung ausgeführte Empfangsverfahren verläuft für jede der Sendeeinrichtungen im Wesentlichen analog zum ersten Ausführungsbeispiel, mit folgenden Modifikationen.

Das FPGA 50' kann mehrerer Empfangspuffer für empfangene Ethernet-Pakete simultan bearbeiten. Im vorliegenden Ausführungsbeispiel ist für jede der Sendeeinrichtungen ein Empfangspuffer vorgesehen. Das FPGA 50' ist weiter so konfiguriert bzw. programmiert, dass es für jede der Verbindungen zu den Sendeeinrichtungen einen eigenen Satz an Verwaltungsdaten führt.

Bei Ausführung wenigstens einiger der Instruktionen in dem Speicher 42 stellt der Prozessor 40 für jede der Sendeeinrichtungen einen getrennten Empfangspufferbereich bereit (in Fig. 10 ist nur der Arbeitsspeicher 44 dargestellt, in dem sich die Pufferbereiche befinden können). Er übermittelt an das FPGA 50' entsprechende Daten, die die Empfangspufferbereiche beschreiben bzw. festlegen. Das die jeweiligen Empfangspufferbereiche beschreibende Daten, beispielsweise Kennung für die Sendeeinrichtung, Anfangsadresse und Größe und/oder Endeadresse des Pufferbereichs, speichert.

Das FPGA 50' ist so konfiguriert bzw. programmiert, dass es nach Empfang eines gültigen Ethernet-Pakets anhand der Ethernet-Quelladresse in den Verwaltungsdaten den zugeordneten Empfangspuffer ermittelt und dann mit diesem die in dem ersten Ausführungsbeispiel beschriebenen Empfangsschritte ausführt, bei denen die zugehörigen, den Verwaltungsdaten zugeordneten Variablen, beispielsweise die Zähler, für die durch die Ethernet-Quelladresse gegebene Sendeeinrichtung getrennt gehalten und behandelt werden. Die Interrupts, die zum Schluss gesendet werden, geben dabei jeweils auch an, auf welchen der Empfangspuffer und damit einen Sendedatenblock welcher der Sendeeinrichtungen er sich bezieht.

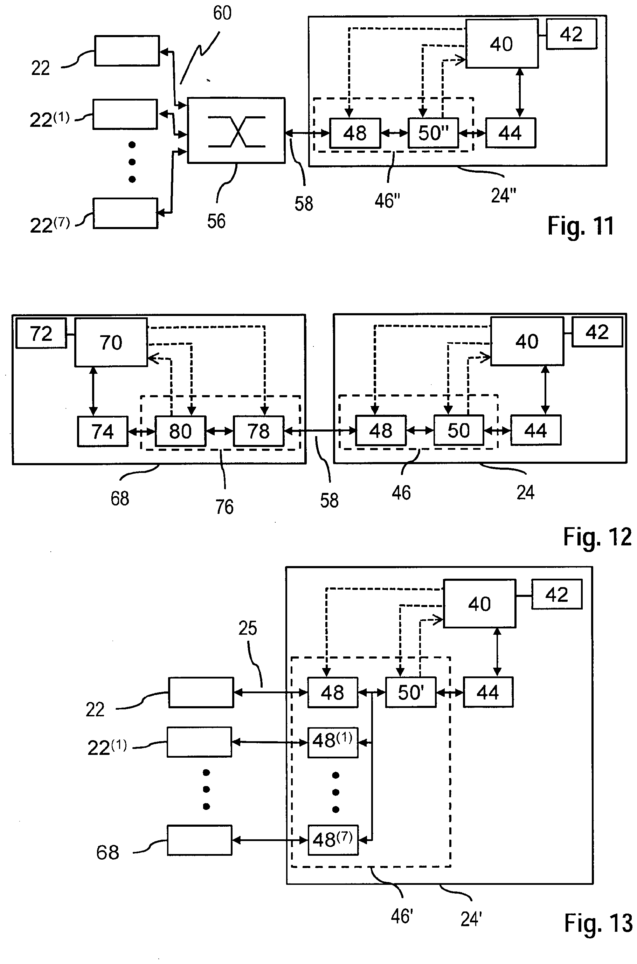

Das sechste Ausführungsbeispiel in Fig. 11 unterscheidet sich von dem fünften Ausführungsbeispiel dadurch, dass die ansonsten unveränderten wenigstens zwei, im Beispiel acht, Sensoreinrichtungen als Sendeeinrichtungen 22, 22⁽¹⁾, ..., 22⁽⁷⁾ über einen Ethernet-Switch 56 mit einer Auswerteinrichtung 24" als Empfangseinrichtung verbunden. Die Sensoreinrichtungen können dabei mit dem Ethernet-Switch und der Ethernet-Switch mit der Auswerteeinrichtung über Ethernet-Verbindungen unterschiedlichen Übertragungsgeschwindigkeiten verbunden sein. Die Ethernet-Verbindung zwischen dem Ethernet-Switch und der Empfangs- bzw. Auswerteeinrichtung 24" weist eine Übertragungsgeschwindigkeit auf, die wenigstens so groß ist wie die größte der Übertragungsgeschwindigkeiten der Ethernet-Verbindungen zwischen dem Ethernet-Switch und den Sende- bzw. Sensoreinrichtungen. Im Beispiel handelt es sich bei der Ethernet-Verbindung 58 zwischen dem Ethernet-Switch 56 und der Auswerteeinrichtung 24" um eine 10GBit - Ethernet-Verbindung, bei den Ethernet-Verbindungen 60 zwischen dem Ethernet-Switch 56 und den Sensoreinrichtungen 22, 22⁽¹⁾, ..., 22⁽⁷⁾ um 1GBit-Ethernet-Verbindungen.

Die Empfangseinrichtung 24" unterscheidet sich von der Empfangseinrichtung 24' des fünften Ausführungsbeispiels dadurch, dass der Empfangsabschnitt 46' durch einen Empfangsabschnitt 46" ersetzt ist. Letzterer unterscheidet sich von dem Empfangsabschnitt 46' zum einen dadurch, dass nur die Netzwerkschnittstelle 48 vorgesehen ist, die wie die Netzwerkschnittstelle 48 des zweiten Ausführungsbeispiels ausgebildet ist. Zum anderen ist das FPGA 50' durch ein FPGA 50" ersetzt, das nur eine Verbindung zu der Netzwerkschnittstelle 48 aufweist, aber die über diese Schnittstelle eingehenden Ethernet-Pakete wie im zweiten Ausführungsbeispiel behandelt. Der Prozessor 40 und der Speicher 42 sind wie im zweiten Ausführungsbeispiel ausgebildet, die Instruktionen des Computerprogramms derart, dass die gleiche Verarbeitung von Daten, insbesondere empfangenen Daten, ausgeführt und der Speicher 44 mit den Empfangspuffern für die Sendeeinrichtungen gleich verwaltet wird.

Ein weiteres Ausführungsbeispiel unterscheidet sich von dem sechsten Ausführungsbeispiel nur durch die Ausbildung des Ethernet-Switch 56. Im Prinzip könnte der Fall auftreten, dass in dem Fall, in dem der Ethernet-Switch ein einfacher Ethernet-Switch ist, dieser in einer Überlastsituation einzelne Ethernet-Pakete verwirft. Dies würde bei dem Verfahren des ersten bzw. sechsten Ausführungsbeispiels dazu führen, dass der gesamte Sendedatenblock, zu dessen Übertragung das Ethernet-Paket verwendet wurde, erneut gesendet werden muss. Insbesondere könnten von den Sensoreinrichtungen kommende Ethernet-Pakete gleichzeitig eintreffen. Da aber nur eine Ethernet-Verbindung zur Weiterleitung an die Auswerteeinrichtung zur Verfügung steht, könnte es zu einer Überlastsituation kommen.

Der Ethernet-Switch 56 ist daher so eingerichtet, dass er Pufferspeicherbereiche für eine Anzahl von Ethernet-Pakete aufweist, die der doppelten Anzahl der mit ihm verbundenen Sende-, im Beispiel Sensoreinrichtungen entspricht. Der Ethernet-Switch ist dann so eingerichtet, dass für jede der Sendeeinrichtungen ein Pufferspeicherbereich zur Verfügung steht, um ein von der jeweiligen Sensoreinrichtung kommendes, empfangenes Ethernet-Paket zwischenspeichern zu können. Weiter ist der Ethernet-Switch so eingerichtet, dass die andere Hälfte der Pufferspeicherbereiche, also eine der Anzahl der Sensoreinrichtungen entsprechende Anzahl, zur Pufferung von Ethernet-Paketen eingerichtet ist, die von der Auswerteeinrichtung kommend an die Sensoreinrichtungen weitergeleitet werden sollen. Dies vermeidet Überlastsituationen, die dadurch entstehen können, dass die Übertragung von Ethernet-Paketen von der Auswerteeinrichtung zu einer oder mehreren der Sensoreinrichtungen wegen der schnelleren Ethernet-Verbindung schneller sein kann als eine Übertragung von dem Ethernet-Switch zu den Sensoreinrichtungen über langsameren Ethernet-Verbindungen zwischen dem Ethernet-Switch und den Sensoreinrichtungen.

Soll die Auswerteeinrichtung in diesen beiden Ausführungsbeispielen jeweils an die Sendeeinrichtungen Daten übertragen, kann vorzugsweise das im folgenden beschriebene Sendeverfahren verwendet werden, für dessen Durchführung die in dem Speicher 42 gespeicherten, von dem Prozessor 40 ausführbaren Instruktionen entsprechende Instruktionen aufweisen, und das FPGA 50' bzw. 50" entsprechend modifiziert ist.

Die Auswerte- bzw. Empfangseinrichtung 4 bzw. 24" ist so ausgebildet, dass sie jeweils auch eine Sendeeinrichtung darstellt. Dazu ist das FPGA 50' bzw. 50" jeweils so konfiguriert bzw. programmiert und verfügt die Empfangseinrichtung 24' bzw. 24" über solche Instruktionen in dem Speicher 42, dass bei Ausführung der Instruktionen der Prozessor in Verbindung mit dem Empfangsabschnitt das in den vorhergehenden Ausführungsbeispielen beschriebene Sendeverfahren durchführt, wobei der Speicher 44, genauer ein entsprechender Bereich des Speichers 44, dem Sendepuffer bzw. Speicher 34 entspricht, in dem der zu versendende Sendedatenblock gespeichert ist. Weiter ist das FPGA wie das FPGA 50' bzw. 50" konfiguriert bzw. programmiert und zusätzlich so, dass es wie das FPGA 51 arbeitet, d.h. zusammen mit dem Prozessor die Schritte ausführt, die denen des Sendeverfahrens des ersten Ausführungsbeispiels entsprechen. In einer Variante könnte es auch die Schritte ausführen, die denen des Sendeverfahrens des zweiten Ausführungsbeispiels entsprechen.

Weiter ist erstens das FPGA der Auswerteeinrichtung jeweils derart ausgebildet und programmiert, dass es mehrere Sendepuffer, im Beispiel eine der Anzahl der Sensoreinrichtungen entsprechende Anzahl von Sendepuffern, simultan bearbeitet und für jede Verbindung zu einer der Sensoreinrichtungen einen eigenen Satz an Verwaltungsdaten führt. Insoweit kann für jede der Sensoreinrichtungen getrennt das Sendeverfahren verwendet werden, das wie das Verfahren im ersten Ausführungsbeispiel, aber wir oben beschrieben unter Verwendung eines FPGA, abläuft.

Um einen besseren Gesamtdurchsatz zu ermöglichen, ist zweitens das FPGA der Auswerteeinrichtung derart ausgebildet und programmiert, dass das FPGA die einzelnen Sendedaten-Teilblöcke in rotierender Weise sendet, z.B. einen Teilblock an die Sensoreinrichtung 22, dann einen Teilblock an die Sensoreinrichtung 22⁽¹⁾ usw. und dann einen Teilblock an die Sensoreinrichtung 22⁽⁷⁾. So können die Ethernet-Verbindungen zu den Sensoreinrichtungen möglichst gleichzeitig betrieben werden, so dass ein besonders guter Gesamtdurchsatz erreicht werden kann.

Im Fall der Verwendung eines Ethernet-Switch wie imsechsten Ausführungsbeispiel ist drittens das FPGA der Auswerteeinrichtung derart ausgebildet und programmiert, das FPGA für jeden gesendeten Sendedaten-Teilblock, der aus einem gegebenen Sendedatenblock gebildet ist und für dieselbe, der jeweiligen Sensoreinrichtung zugeordnete Ethernet-Zieladresse bestimmt ist, eine einzuhaltende Totzeit führt, die so gewählt ist, dass sichergestellt ist, dass der Vorgängerblock nach Ablauf der Totzeit den Ethernet-Switch bereits verlassen hat; die Länge der Totzeit kann insbesondere auch von dem Vorhandensein und der Größe eines Puffers des Switch abhängen. Im Beispiel ergibt sie sich aus der Länge des Sendedaten-Teilblocks und der Übertragungsrate der Sensoranbindung. Der nächste Ethernet-Teilblock mit derselben Ethernet-Zieladresse wird erst nach Ablauf dieser Totzeit gesendet.

Ein weiteres Ausführungsbeispiel in Fig. 12 unterscheidet sich von dem ersten Ausführungsbeispiel darin, dass die Sendeeinrichtung, im Beispiel die Sensoreinrichtung 22, durch eine Empfangseinrichtung in Form einer zweiten Auswerteeinrichtung 68 ersetzt ist, die wie die Auswerteeinrichtung 24 des ersten Ausführungsbeispiels, im Folgenden als erste Auswerteeinrichtung bezeichnet, ausgebildet ist. Die beiden Auswerteeinrichtungen sind durch eine Ethernet-Verbindung 58 verbunden, die im Beispiel eine 10 GBit-Ethernet-Verbindung sein kann.

Die zweite Empfangseinrichtung 68 weist analog zur ersten Auswerteeinrichtung 24 einen dem Prozessor 40 entsprechenden Prozessor 70, einen dem Speicher 42 entsprechenden Speicher 72, einen dem Arbeitsspeicher 44 entsprechenden Arbeitsspeicher 74 und einen dem Empfangsabschnitt 46 entsprechenden Empfangsabschnitt 76 auf. Der Empfangsabschnitt 76 verfügt über einen dem FPGA 50 entsprechendes FPGA 80 und eine der Netzwerk-Schnittstelle 48 entsprechende Netzwerk-Schnittstelle 78. Diese Komponenten sind wie im ersten Ausführungsbeispiel miteinander verbunden und arbeiten bis auf die im Folgenden beschriebenen Modifikationen in gleicher Weise.

Die Instruktionen in dem Speicher 72 unterscheiden sich von denen in dem Speicher 42 insoweit, als erstens bei Ausführung durch den Prozessor 70 die Auswertung von Daten durch die Auswerteeinrichtung entsprechend deren Aufgaben verändert ist.

Zum anderen umfassen die Instruktionen Instruktionen, bei deren Ausführung durch den Prozessor 70 in Verbindung mit dem FPGA 80 Sendedatenblöcke in dem Speicher 72 mit einem erfindungsgemäßen Verfahren an die Auswerteeinrichtung 24 versendet werden können. Dazu ist das FPGA 80 so ausgebildet und konfiguriert bzw. programmiert, dass es neben den Funktionen des FPGA 50 die Funktionen des FPGA 51 des dritten Ausführungsbeispiels zum Senden von Sendedatenblöcken ausführt. In entsprechender Weise sind in die Instruktionen in der Auswerteeinrichtung 24 und die Konfiguration bzw. Programmierung des FPGA 50 darin geändert.

In Varianten dieses Ausführungsbeispiels kann das jeweilige FPGA auch durch zwei FPGAs ersetzt sein, wobei eines dazu konfiguriert bzw. programmiert ist, Schritte zum Versenden von Sendedatenblöcken und das andere dazu konfiguriert bzw. programmiert ist, Schritte zum Empfangen von Ethernet-Paketen einer Folge von Ethernet-Paketen für einen Sendedatenblock aus

Noch ein weiteres Ausführungsbeispiel in Fig. 13 unterscheidet sich von dem fünften Ausführungsbeispiel dadurch, dass wenigstens eine der Sensoreinrichtungen, die Sensoreinrichtung 22⁽⁷⁾, durch eine weitere Auswerteeinrichtung, die Auswerteeinrichtung 60 ersetzt ist. Die Auswerteeinrichtungen sind dabei über eine Punkt-zu-Punkt-Ethernet-Verbindung miteinander verbunden. Die Bezugszeichen bezeichnen dabei gleiche Komponenten und die Ausführungen dazu gelten auch hier entsprechend.

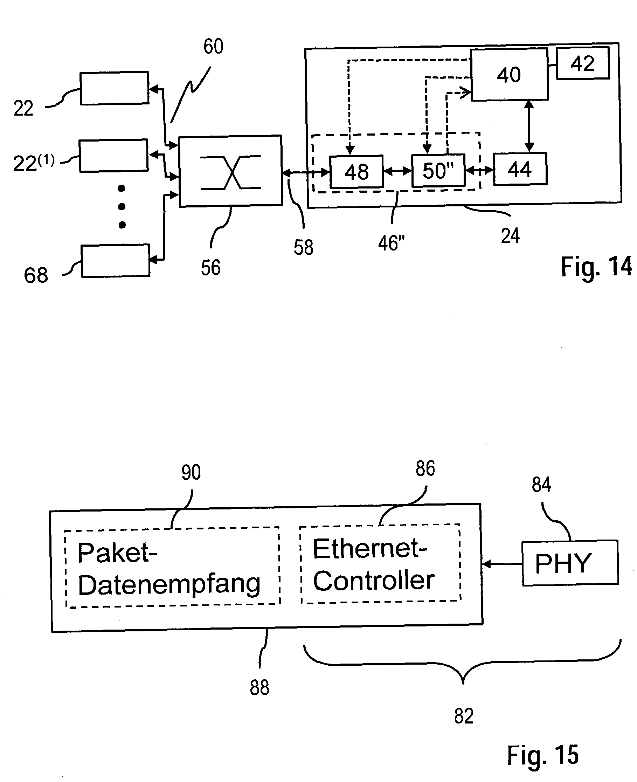

Noch ein weiteres Ausführungsbeispiel in Fig. 14 unterscheidet sich von dem sechsten Ausführungsbeispiel dadurch, dass wenigstens eine der Sensoreinrichtungen, die Sensoreinrichtung 22⁽⁷⁾ durch eine weitere Auswerteeinrichtung, die Auswerteeinrichtung 60 des vorhergehenden Ausführungsbeispiels, ersetzt ist. Die Auswerteeinrichtungen und die Sensoreinrichtung bzw. Sensoreinrichtungen sind über den Ethernet-Switch 56 mittels Ethernet-Verbindungen verbunden. Im Beispiel sind die Ethernet-Verbindungen zwischen den Auswerteeinrichtungen 10 Gbit-Verbindungen, Verbindungen mit geringer Datenrate wären aber auch möglich. Um den Ethernet-Switch nicht zu überlasten, kann die verfügbare Datenrate, die von dem Ethernet-Switch zur Verfügung gestellt wird, unter den Teilnehmern aufgeteilt werden, wozu insbesondere das beschriebene Verfahren des rotierenden Sendes mit Einhaltung von Totzeiten verwendet werden kann. Die Bezugszeichen bezeichnen dabei gleiche Komponenten und die Ausführungen dazu gelten auch hier entsprechend.

In anderen Varianten dieser Ausführungsform können wenigstens eine Sensoreinrichtung oder einige der Sensoreinrichtungen oder alle Sensoreinrichtungen durch entsprechende Auswerteeinrichtungen ersetzt sein, die wie die Auswerteeinrichtung 68 ausgebildet sind.

In anderen Ausführungsbeispielen können die Verwaltungsdaten eines Ethernet-Blocks einer Folge derart gebildet sein, dass aus den Verwaltungsdaten ermittelbar ist, ob es sich um einen Start- Block oder End-Block handelt. Auf diese Weise kann der Beginn einer Folge für einen neuen Sendedatenblock leicht erkannt werden.

In anderen Ausführungsbeispielen könnten Verwaltungsdaten statt des Ende-Bits neben den aufsteigenden Sequenznummern SN die Gesamtanzahl SA der Teilblöcke enthalten. Der letzte Teilblock bzw. das letzte Ethernet-Paket bzw. der Endblock wird dann durch die Sequenznummer SA-1 identifiziert. Dazu wird bei dem Sendeverfahren in Schritt S12 die Größe des Sendedatenblocks und daraus bei gegebener Größe von Sendedaten-Teilblöcken, die Anzahl SA der Sendedaten-Teilblöcke und damit Ethernet-Pakete ermittelt. Die in Schritt S16 gebildeten Protokoll-Verwaltungsdaten für Ethernet-Pakete der Folge enthalten dann diese Anzahl SA. Zur Prüfung, ob ein letzter Teilblock eingetroffen ist, ist dann der Schritt S28 entsprechend geändert; es wird geprüft oder die Sequenznummer gleich SA-1 ist.

In noch anderen Ausführungsbeispielen könnten absteigende Sequenznummern oder andere Nummernfolgen in den Protokoll-Verwaltungsdaten verwendet werden. In Schritt S12 des Sendeverfahrens in Fig. 4 kann dann beispielsweise nach der Ermittlung der Anzahl SA-1 der Sendedaten-Teilblöcke, die wie zuvor beschrieben erfolgen kann, der Zähler für die Sequenznummer auf die Anzahl SA-1 initialisiert werden. In Schritt S14 kann geprüft werden, ob die aktuelle Sequenznummer 0 ist. In diesem Fall würde das Verfahren mit Schritt S18 fortgesetzt, andernfalls in dem modifizierten Schritt S16 die Sequenznummer im Eins erniedrigt (dekrementiert) statt inkrementiert. Entsprechend kann dann beim Empfangsverfahren in Fig. 5 in Schritt S22 der Zähler SZ auf die Sequenznummer des ersten empfangenen Sendedaten-Teilblocks für einen jeweiligen Sendedatenblock, die SA-1 ist. In Schritt S26 wird das Inkrementieren durch Dekrementieren ersetzt, in Schritt S28 wird geprüft, ob die Sequenznummer in den Verwaltungsdaten Null ist. Dann liegt der letzte Sendedaten-Teilblock vor, sonst nicht.

Alternativ könnte bei Erkennen des letzten Sendedaten-Blocks dessen Sequenznummer auf den Wert 0 gesetzt werden.

In anderen Ausführungsbeispielen kann die Sendeeinrichtung statt des optischen Sensors oder zusätzlich zu diesem einen hoch ortsauflösenden Magnetsensor zur ortsaufgelösten Erfassung magnetischer Eigenschaften von Wertdokumenten aufweisen, dessen Sensorrohdaten über eine Ethernet-Verbindung an die Auswerteeinrichtung zur Auswertung übertragen werden.

Weitere Ausführungsbeispiele können sich von den beschriebenen Ausführungsbeispielen dadurch unterscheiden, dass die Netzwerkschnittstellen anders ausgebildet sind. Bei der Sende- und/oder Empfangseinrichtung kann der PHYs als separater Baustein vorhanden sein. Die Funktion des Ethernet-Controllers kann dann durch das entsprechend modifizierte FPGA der Sende- und/oder Empfangseinrichtung übernommen werden. Fig. 15 zeigt dies für eine Ethernet-Schnittstelle 82 in einer Blockdarstellung. Die physische Ethernet-Verbindung wird mit dem PHY 84 verbunden. Der Ethernet-Controller 86 ist in dem FPGA 88 implementiert, in dem auch die Verarbeitung der Ethernet-Pakete bzw. der Daten darin durch den Block 90 veranschaulicht ist.

Noch andere Ausführungsbeispiele können sich von den zuvor beschriebenen Ausführungsbeispielen dadurch unterscheiden, dass in dem Ethernet-Paket-Header das Type-Feld für Protokoll-Verwaltungsdaten verwendet wird.

In den Beispielen wird bei der Übertragung der Ethernet-Pakete kein anderes bekanntes Protokoll, beispielsweise der Internet- und/oder Transportschicht wie TCP oder UDP, verwendet.

## Patentansprüche

1. Verfahren zum Übertragen eines Sendedatenblocks von einer Sendeeinrichtung (22), beispielsweise wenigstens einem Teil eines Sensors (22) oder einem Teil einer Auswerteeinrichtung zur Auswertung von Sendedaten, über eine Ethernet-Verbindung (25) zu einer Empfangseinrichtung (24; 24'), beispielsweise einer Auswerteeinrichtung zur Verarbeitung der Sendedaten, die einen Speicher (44) zum Speichern eines übertragenen Sendedatenblocks (56), und einen Prozessor (40) zur wenigstens teilweisen Verarbeitung des übertragenen, in dem Speicher (44) gespeicherten Sendedatenblocks (56) aufweist, wobei die Sendedaten in dem Sendedatenblock (56) Sensordaten eines Sensors (22) zur Untersuchung von Wertdokumenten (12) sind,
bei dem die Sendeeinrichtung (22) aus den Daten des Sendedatenblocks (56) eine Folge von Ethernet-Paketen (54) bildet, die jeweils Verwaltungsdaten und einen Sendedaten-Teilblock, der aus wenigstens einem Teil der Daten gebildet ist, umfassen, so dass die Sendedaten-Teilblöcke der Ethernet-Pakete (54) der Folge die Daten des Sendedatenblocks (56) umfassen, wobei die Verwaltungsdaten Verwaltungsdaten umfassen, aus denen ermittelbar ist, ob eines der Ethernet-Pakete (54) das letzte Ethernet-Paket der Folge ist, und die gebildeten Ethernet-Pakete (54) über die Ethernet-Verbindung (25) an die Empfangseinrichtung (24) sendet, und bei dem die Empfangseinrichtung (24) die Ethernet-Pakete der jeweiligen Folge empfängt und unter Verwendung wenigstens eines Teils der Verwaltungsdaten die Sendedaten-Teilblöcke der empfangenen Ethernet-Pakete (54) der Folge von Ethernet-Paketen für den Sendedatenblock (56) in den Speicher (44) schreibt, wobei nicht bei oder nach dem Schreiben jedes der Sendedaten-Teilblöcke ein Interrupt an den Prozessor (40) gesendet wird.

2. Verfahren nach Anspruch 1, bei dem ein Empfangssignal, beispielsweise einen Interrupt, an den Prozessor (40), abgegeben, vorzugsweise nur abgegeben, wird, wenn eine vorgegebene Anzahl von Ethernet-Paketen (54) der Folge empfangen und die Daten der Sendedaten-Teilblöcke darin in den Speicher (44) geschrieben wurden, und/ oder beim Empfangen oder Speichern wenigstens ein vorgegebener Fehler auftritt und/oder die Sendedaten aus dem Nutzdatenblock des letzten Ethernet-Paketes (54) der Folge in den Speicher (44) geschrieben wurden.

3. Verfahren nach Anspruch 1 oder 2, bei dem die Empfangseinrichtung (24) ein FPGA (50; 50') aufweist, und bei dem mittels des FPGA (50; 50') unter Verwendung der Verwaltungsdaten die Sendedaten-Teilblöcke aus empfangenen Ethernet-Paketen in den Speicher (44) geschrieben werden und bei dem vorzugsweise das FPGA (50; 50') nach Erkennung und/oder Schreiben eines letzten Sendedaten-Teilblocks die Abgabe eines Empfangssignals, beispielsweise eines Interrupts, an den Prozessor (40) auslöst.

4. Verfahren nach einem der vorhergehenden Ansprüche, bei dem die Verwaltungsdaten jedes der Ethernet-Pakete (54) der Folge von Ethernet-Paketen (54) für den Sendedatenblock eine Sequenzkennung umfassen, die den Sendedaten-Teilblock so kennzeichnet, dass bei deren Verwendung aus den Sendedaten-Teilblöcken der Sendedatenblock (56) gebildet werden kann, und zum Schreiben der Sendedaten-Teilblöcke in den Speicher (44) die Sequenzkennung verwendet wird.

5. Verfahren nach einem der vorhergehenden Ansprüche, bei dem die Verwaltungsdaten jedes der Ethernet-Pakete (54) der Folge von Ethernet-Paketen für den Sendedatenblock (56) eine Sendedatenblock-Kennung umfassen, die den Sendedatenblock (56) kennzeichnet.

6. Verfahren nach einem der vorhergehenden Ansprüche, bei dem für wenigstens einen der Sendedaten-Teilblöcke wenigstens zwei Ethernet-Pakete (54), deren Nutzdatenblock jeweils den Sendedaten-Teilblock enthält, gebildet und über die Ethernet-Verbindung (25) an die Empfangseinrichtung (24) gesendet werden, und bei Empfang von mehr als einem Ethernet-Paket (54) für denselben Sendedaten-Teilblock die Daten des Sendedaten-Teilblocks nur einmal in den Speicher (44) geschrieben werden oder die Daten des Sendedaten-Teilblocks in dem Speicher (44) überschrieben werden.

7. Verfahren nach einem der vorhergehenden Ansprüche, bei dem wenigstens eine weitere Sendeeinrichtung (22^{(1)...} 22⁽⁷⁾) aus den Daten eines weiteren, von ihr zu versendenden Sendedatenblocks (56) eine weitere Folge von Ethernet-Paketen (54) bildet, die jeweils Verwaltungsdaten und einen Sendedaten-Teilblock, der aus wenigstens einem Teil der Daten gebildet ist, umfassen, so dass die Sendedaten-Teilblöcke der Ethernet-Pakete (54) der weiteren Folge die Daten des weiteren Sendedatenblocks (56) umfassen, wobei die Verwaltungsdaten Verwaltungsdaten umfassen, aus denen ermittelbar ist, ob eines der Ethernet-Pakete (54) das letzte Ethernet-Paket der weiteren Folge ist, und die gebildeten Ethernet-Pakete über eine Ethernet-Verbindung an die Empfangseinrichtung (24') sendet, und bei dem die Empfangseinrichtung (24') nach dem Empfangen der Ethernet-Pakete(54) diese in Abhängigkeit von der Sendeeinrichtung (22, 22 ^{(1)...} 22⁽⁷⁾), die diese gesendet hat, vorzugsweise getrennt nach Sendeeinrichtung, verarbeitet.

8. Sendeeinrichtung (22) zum Senden wenigstens eines Sendedatenblocks (56), wobei die Sendedaten in dem Sendedatenblock (56) Sensordaten eines Sensors (22) zur Untersuchung von Wertdokumenten (12) sind, die wenigstens ein Teil eines Sensors (22) ist oder einen Sensor umfasst oder wenigstens einen Teil einer Auswerteeinrichtung bildet, die einen Sendepuffer (34) zum wenigstens teilweisen und temporären Speichern von Daten des Sendedatenblocks (56), und
eine Ethernet-Schnittstelle (38) aufweist, und
dazu ausgebildet ist, aus dem Sendedatenblock (56) eine Folge von Ethernet-Paketen (54) zu bilden, die jeweils Verwaltungsdaten und einen aus dem jeweiligen Sendedatenblock (56) gebildeten Sendedaten-Teilblock umfassen, so dass die Sendedaten-Teilblöcke der Ethernet-Pakete (54) der Folge die Daten des Sendedatenblocks (56) umfassen, wobei die Verwaltungsdaten Verwaltungsdaten umfassen, aus denen ermittelbar ist, ob eines der Ethernet-Pakete (54) das letzte Ethernet-Paket der Folge ist, und die Ethernet-Pakete (54) über die Ethernet-Schnittstelle (38) zu versenden.

9. Sendeeinrichtung nach Anspruch 8, die weiter einen Prozessor (32) und Instruktionen eines Computerprogramms, bei deren Ausführung der Prozessor aus dem Sendedatenblock (56) in dem Sendepuffer die Folge von Ethernet-Paketen (54) bildet, aufweist.

10. Sendeeinrichtung nach Anspruch 8 oder Anspruch 9, die ein mit der Ethernet-Schnittstelle (38) verbundenes oder wenigstens einen Teil der Ethernet-Schnittstelle (38) bildendes FPGA (51) aufweist, das so programmiert ist, dass es aus dem Sendedatenblock (56) die Verwaltungsdaten und die Sendedaten-Teilblöcke für die jeweilige Folge von Ethernet-Paketen (54) bildet.

11. Sendeeinrichtung nach Anspruch 8 oder Anspruch 9, bei der die Ethernet-Schnittstelle (38) einen Ethernet-Controller mit einer internen DMA-Funktionalität aufweist, der so ausgebildet ist, dass er selbständig Deskriptor-Listen abarbeiten kann.

12. Empfangseinrichtung (24; 24') zum Empfang von Folgen von Ethernet-Paketen, die von einer Sendeeinrichtung (22) nach einem der Ansprüche 8 bis 11 bildbar sind und/oder bei einem Verfahren nach den Ansprüchen 1 bis 7 gebildet wurden, und jeweils Sendedaten-Teilblöcke eines Sendedatenblocks (56) enthalten, mit
einem Speicher (44) zum Speichern eines übertragenen Sendedatenblocks, einem Prozessor (40) zum wenigstens teilweisen Verarbeiten des in dem Speicher (44) gespeicherter Sendedatenblocks, und
einem Empfangsabschnitt (46; 46'), der zum Empfang von Folgen von Ethernet-Paketen (54) mit Daten des Sendedatenblocks (56) und Schreiben der in den empfangenen Ethernet-Paketen (54) jeweils enthaltenen Sendedaten-Teilblöcke unter Verwendung wenigstens eines Teils der Verwaltungsdaten in den Speicher (44) ausgebildet ist,
wobei der Empfangsabschnitt (46; 46') weiter so ausgebildet ist, dass der Empfangsabschnitt (46; 46') nicht bei oder nach dem Schreiben jedes der Sendedaten-Teilblöcke einen Interrupt an den Prozessor (40) sendet.

13. Empfangseinrichtung nach Anspruch 12, bei der der Empfangsabschnitt (46; 46') so ausgebildet ist, dass er ein Empfangssignal, beispielsweise einen Interrupt, an den Prozessor (40) abgibt, vorzugsweise nur abgibt, wenn eine vorgegebene Anzahl von Ethernet-Paketen (54) derselben Folge empfangen und die Sendedaten der Sendedaten-Teilblöcke darin in den Speicher (44) geschrieben wurden, und/oder beim Empfangen oder Speichern wenigstens ein vorgegebener Fehler auftritt und/oder die Sendedaten aus dem Nutzdatenblock des letzten Ethernet-Paketes der Folge in den Speicher (44) geschrieben wurden.

14. Empfangseinrichtung nach Anspruch 12 oder Anspruch 13, bei der der Empfangsabschnitt (46; 46') ein FPGA (50; 50') aufweist, wobei der Empfangsabschnitt (46; 46') so ausgebildet und das FPGA (50) so konfiguriert bzw. programmiert ist, dass mittels des FPGA (50) unter Verwendung der Verwaltungsdaten die Sendedaten-Teilblöcke aus empfangenen Ethernet-Paketen (54) in den Speicher (44) geschrieben werden und dass das FPGA (50) vorzugsweise nach Schreiben der Sendedaten-Teilblöcke einer vorgegebenen Anzahl von Ethernet-Paketen (54) der Folge in den Speicher (44) und/oder Schreiben eines letzten Sendedaten-Teilblocks der Folge die Abgabe eines Empfangssignals, beispielsweise eines Interrupts, an den Prozessor (40) auslöst.

15. Empfangseinrichtung nach Anspruch 14, bei der der Empfangsabschnitt (46; 46') einen PHY aufweist, der mit dem FPGA (50; 50') über eine Datenverbindung verbunden ist, wobei das FPGA (50, 50') weiter so konfiguriert bzw. programmiert ist, dass es auch als Ethernet-Controller arbeitet.

16. Empfangseinrichtung nach einem dem Ansprüche 14 oder 15, bei dem das das FPGA (50; 50'), der Prozessor (40) und der Speicher (44) über ein PCIe-Netzwerk verbunden sind.

17. Empfangseinrichtung nach einem der Ansprüche 14 bis 16, die mehrere PHY umfasst, die mit dem FPGA (50; 50') verbunden sind, und das FPGA (50; 50') so programmiert ist, dass Sendedaten-Teilblöcke von Ethernet-Paketen, die von einem jeweiligen der PHY empfangen wurden, jeweils in den Speicher (44) schreibt.

18. Empfangseinrichtung nach einem der Ansprüche 12 bis 17, die auch eine Sendeeinrichtung (22) nach einem Ansprüche 8 bis 11 umfasst, wobei die Ethernet-Schnittstelle der Sendeeinrichtung (22) durch einen Abschnitt des Empfangsabschnitts (46; 46') gegeben ist, der auch als Ethernet-Schnittstelle der Sendeeinrichtung (22) arbeitet.

19. Vorrichtung zur Bearbeitung von Wertdokumenten (12) mit einer Zuführeinrichtung (14) zur Zuführung von vereinzelten Wertdokumenten (12),
einer Ausgabeeinrichtung 6) zur Ausgabe bearbeiteter Wertdokumente(12),
einer Transporteinrichtung (18) zum Transportieren vereinzelter Wertdokumente von der Zuführeinrichtung (14) zu der Ausgabeeinrichtung (18), einer Sensoreinrichtung 822) zur Erfassung physikalischer Eigenschaften von der Transporteinrichtung (18) transportierter Wertdokumente und Bildung von Sensordaten für das jeweilige Wertdokument, und
einer über eine Ethernet-Verbindung (25) mit der Sensoreinrichtung (22) verbundenen Auswerteeinrichtung (24) zur Auswertung der Sensordaten der Sensoreinrichtung (22) und Steuerung der Transporteinrichtung (18) in Abhängigkeit vorn Ergebnis der Auswertung der Sensordaten, wobei die Sensoreinrichtung (22) als Sendeeinrichtung nach einem der Ansprüche 8 bis 11 zur Übermittlung der Sensordaten für ein Wertdokument als Sendedatenblock und
die Auswerteeinrichtung (24) als Empfangseinrichtung nach einem der Ansprüche 12 bis 18 ausgebildet ist.

## Claims

1. Method for transmitting a transmission data block from a transmission device (22), for example at least one part of a sensor (22) or one part of an evaluation device for evaluating transmission data, via an Ethernet connection (25) to a reception device (24; 24'), for example an evaluation device for processing the transmission data, which has a memory (44) for storing a transmitted transmission data block (56) and a processor (40) for at least partially processing the transmitted transmission data block (56) stored in the memory (44), wherein the transmission data in the transmission data block (56) are sensor data from a sensor (22) for examining valuable documents (12),
in which the transmission device (22) uses the data from the transmission data block (56) to form a sequence of Ethernet packets (54) each comprising administrative data and a transmission data sub-block formed from at least some of the data, with the result that the transmission data sub-blocks of the Ethernet packets (54) in the sequence comprise the data from the transmission data block (56), wherein the administrative data comprise administrative data from which it is possible to determine whether one of the Ethernet packets (54) is the last Ethernet packet in the sequence, and transmits the Ethernet packets (54) that have been formed to the reception device (24) via the Ethernet connection (25), and
in which the reception device (24) receives the Ethernet packets in the respective sequence and writes the transmission data sub-blocks of the received Ethernet packets (54) in the sequence of Ethernet packets for the transmission data block (56) to the memory (44) using at least some of the administrative data, wherein an interrupt is not transmitted to the processor (40) while or after writing each of the transmission data sub-blocks.

2. Method according to Claim 1, in which a reception signal, for example an interrupt, is output to the processor (40), is preferably output only if a predefined number of Ethernet packets (54) in the sequence have been received and the data from the transmission data sub-blocks therein have been written to the memory (44), and/or at least one predefined error occurs during reception or storage, and/or the transmission data from the useful data block of the last Ethernet packet (54) in the sequence have been written to the memory (44).

3. Method according to Claim 1 or 2, in which the reception device (24) has an FPGA (50; 50'), and in which the transmission data sub-blocks from received Ethernet packets are written to the memory (44) by means of the FPGA (50; 50') using the administrative data, and in which, after detecting and/or writing a final transmission data sub-block, the FPGA (50; 50') preferably initiates the output of a reception signal, for example an interrupt, to the processor (40) .

4. Method according to one of the preceding claims, in which the administrative data of each of the Ethernet packets (54) in the sequence of Ethernet packets (54) for the transmission data block comprises a sequence identifier which identifies the transmission data sub-block in such a manner that, when used, the transmission data block (56) can be formed from the transmission data sub-blocks, and the sequence identifier is used to write the transmission data sub-blocks to the memory (44).

5. Method according to one of the preceding claims, in which the administrative data of each of the Ethernet packets (54) in the sequence of Ethernet packets for the transmission data block (56) comprise a transmission data block identifier which identifies the transmission data block (56).

6. Method according to one of the preceding claims, in which at least two Ethernet packets (54), the useful data block of each of which contains the transmission data sub-block, are formed for at least one of the transmission data sub-blocks and are transmitted to the reception device (24) via the Ethernet connection (25), and, if more than one Ethernet packet (54) is received for the same transmission data sub-block, the data from the transmission data sub-block are written to the memory (44) only once or the data from the transmission data sub-block in the memory (44) are overwritten.

7. Method according to one of the preceding claims, in which at least one further transmission device (22⁽¹⁾...22⁽⁷⁾) uses the data from a further transmission data block (56) to be sent by it to form a further sequence of Ethernet packets (54) each comprising administrative data and a transmission data sub-block formed from at least some of the data, with the result that the transmission data sub-blocks of the Ethernet packets (54) in the further sequence comprise the data from the further transmission data block (56), wherein the administrative data comprise administrative data from which it is possible to determine whether one of the Ethernet packets (54) is the last Ethernet packet in the further sequence, and transmits the Ethernet packets that have been formed to the reception device (24') via an Ethernet connection, and
in which, after receiving the Ethernet packets (54), the reception device (24') processes the latter on the basis of the transmission device (22, 22⁽¹⁾...22⁽⁷⁾) that transmitted them, preferably separately according to the transmission device.

8. Transmission device (22) for transmitting at least one transmission data block (56), wherein the transmission data in the transmission data block (56) are sensor data from a sensor (22) for examining valuable documents (12), which is at least one part of a sensor (22) or comprises a sensor or forms at least one part of an evaluation device, which has a transmission buffer (34) for at least partially and temporarily storing data from the transmission data block (56) and has an Ethernet interface (38), and is designed to use the transmission data block (56) to form a sequence of Ethernet packets (54) each comprising administrative data and a transmission data sub-block formed from the respective transmission data block (56), with the result that the transmission data sub-blocks of the Ethernet packets (54) in the sequence comprise the data from the transmission data block (56), wherein the administrative data comprise administrative data from which it is possible to determine whether one of the Ethernet packets (54) is the last Ethernet packet in the sequence, and to transmit the Ethernet packets (54) via the Ethernet interface (38).

9. Transmission device according to Claim 8, which also has a processor (32) and instructions of a computer program, during the execution of which the processor forms the sequence of Ethernet packets (54) from the transmission data block (56) in the transmission buffer.

10. Transmission device according to Claim 8 or Claim 9, which has an FPGA (51) which is connected to the Ethernet interface (38) or forms at least one part of the Ethernet interface (38) and is programmed in such a manner that it forms the administrative data and the transmission data sub-blocks for the respective sequence of Ethernet packets (54) from the transmission data block (56).

11. Transmission device according to Claim 8 or Claim 9, in which the Ethernet interface (38) has an Ethernet controller with an internal DMA functionality, which controller is designed such that it can independently process descriptor lists.

12. Reception device (24; 24') for receiving sequences of Ethernet packets which can be formed by a transmission device (22) according to one of Claims 8 to 11 and/or were formed in a method according to Claims 1 to 7 and each contain transmission data sub-blocks of a transmission data block (56), having a memory (44) for storing a transmitted transmission data block,
a processor (40) for at least partially processing the transmission data block stored in the memory (44), and
a reception section (46; 46') which is designed to receive sequences of Ethernet packets (54) containing data from the transmission data block (56) and to write the transmission data sub-blocks respectively contained in the received Ethernet packets (54) to the memory (44) using at least some of the administrative data,
wherein the reception section (46; 46') is also designed such that the reception section (46; 46') does not transmit an interrupt to the processor (40) during or after writing each of the transmission data sub-blocks.

13. Reception device according to Claim 12, in which the reception section (46; 46') is designed in such a manner that it outputs a reception signal, for example an interrupt, to the processor (40), preferably outputs it only when a predefined number of Ethernet packets (54) in the same sequence have been received and the transmission data from the transmission data sub-blocks therein have been written to the memory (44), and/or at least one predefined error occurs during reception or storage, and/or the transmission data from the useful data block of the last Ethernet packet in the sequence have been written to the memory (44).

14. Reception device according to Claim 12 or Claim 13, in which the reception section (46; 46') has an FPGA (50; 50'), wherein the reception section (46; 46') is designed and the FPGA (50) is configured or programmed in such a manner that the transmission data sub-blocks from received Ethernet packets (54) are written to the memory (44) by means of the FPGA (50) using the administrative data and the FPGA (50), preferably after writing the transmission data sub-blocks of a predefined number of Ethernet packets (54) in the sequence to the memory (44) and/or writing a final transmission data sub-block in the sequence, initiates the output of a reception signal, for example an interrupt, to the processor (40) .

15. Reception device according to Claim 14, in which the reception section (46; 46') has a PHY which is connected to the FPGA (50; 50') via a data connection, wherein the FPGA (50, 50') is also configured or programmed in such a manner that it also operates as an Ethernet controller.

16. Reception device according to either of Claims 14 and 15, in which the FPGA (50; 50'), the processor (40) and the memory (44) are connected via a PCIe network.

17. Reception device according to one of Claims 14 to 16, which comprises a plurality of PHY which are connected to the FPGA (50; 50'), and the FPGA (50; 50') is programmed in such a manner that it respectively writes transmission data sub-blocks of Ethernet packets received from a respective one of the PHY to the memory (44).

18. Reception device according to one of Claims 12 to 17, which also comprises a transmission device (22) according to one of Claims 8 to 11, wherein the Ethernet interface of the transmission device (22) is provided by a section of the reception section (46; 46') which also operates as an Ethernet interface of the transmission device (22).

19. Apparatus for processing valuable documents (12), having
a supply device (14) for supplying separated valuable documents (12),
an output device 6) for outputting processed valuable documents (12),
a transport device (18) for transporting separated valuable documents from the supply device (14) to the output device (18),
a sensor device 822) for capturing physical properties of valuable documents transported by the transport device (18) and forming sensor data for the respective valuable document, and
an evaluation device (24) which is connected to the sensor device (22) via an Ethernet connection (25) and is intended to evaluate the sensor data from sensor device (22) and to control the transport device (18) on the basis of the result of the evaluation of the sensor data,
wherein the sensor device (22) is in the form of a transmission device according to one of Claims 8 to 11 for transmitting the sensor data for a valuable document as a transmission data block, and
the evaluation device (24) is in the form of a reception device according to one of Claims 12 to 18.

## Revendications

1. Procédé de transmission d'un bloc de données d'émission, par l'intermédiaire d'une connexion Ethernet (25), d'un moyen d'émission (22), par exemple au moins une partie d'un capteur (22) ou une partie d'un moyen d'évaluation destiné à évaluer des données d'émission, à un moyen de réception (24 ; 24'), par exemple un moyen d'évaluation destiné à traiter les données d'émission, qui comporte une mémoire (44) destinée à mémoriser un bloc de données d'émission (56) transmis, et un processeur (40) destiné à traiter au moins partiellement le bloc de données d'émission (56) transmis et mémorisé dans la mémoire (44), dans lequel les données d'émission contenues dans le bloc de données d'émission (56) sont des données de capteur d'un capteur (22) destiné à examiner des documents de valeur (12),
dans lequel le moyen d'émission (22) forme à partir des données du bloc de données d'émission (56) une séquence de paquets Ethernet (54), qui comprennent respectivement des données de gestion et un sous-bloc de données d'émission formé à partir d'au moins une partie des données, de telle sorte que les sous-blocs de données d'émission des paquets Ethernet (54) de la séquence comprennent les données du bloc de données d'émission (56), dans lequel les données de gestion comprennent des données de gestion à partir desquelles il est possible de déterminer si l'un des paquets Ethernet (54) est le dernier paquet Ethernet de la séquence, et émet les paquets Ethernet formés (54) vers le moyen de réception (24) par l'intermédiaire de la connexion Ethernet (25), et dans lequel le moyen de réception (24) reçoit les paquets Ethernet de la séquence respective et, à l'aide d'au moins une partie des données de gestion, écrit dans la mémoire (44) les sous-blocs de données d'émission des paquets Ethernet reçus (54) de la séquence de paquets Ethernet pour le bloc de données d'émission (56), dans lequel une interruption n'est pas envoyée au processeur (40) pendant ou après l'écriture de chacun des sous-blocs de données d'émission.

2. Procédé selon la revendication 1, dans lequel un signal de réception, par exemple une interruption, est fourni en sortie au processeur (40), et n'est de préférence fourni en sortie que lorsqu'un nombre prédéfini de paquets Ethernet (54) de la séquence ont été reçus et que les données des sous-blocs de données d'émission qu'ils contiennent ont été écrites dans la mémoire (44), et/ou lorsqu'au moins une erreur prédéfinie se produit lors de la réception ou de la mémorisation et/ou que les données d'émission ont été écrites dans la mémoire (44) à partir du bloc de données utiles du dernier paquet Ethernet (54) de la séquence.

3. Procédé selon la revendication 1 ou 2, dans lequel le moyen de réception (24) comporte un FPGA (50 ; 50'), et dans lequel, au moyen du FPGA (50 ; 50'), à l'aide des données de gestion, les sous-blocs de données d'émission sont écrits dans la mémoire (44) à partir de paquets Ethernet reçus et dans lequel, de préférence, le FPGA (50 ; 50') déclenche la fourniture en sortie au processeur (40) d'un signal de réception, par exemple une interruption, après la détection et/ou l'écriture d'un dernier sous-bloc de données d'émission.

4. Procédé selon l'une quelconque des revendications précédentes, dans lequel les données de gestion de chacun des paquets Ethernet (54) de la séquence de paquets Ethernet (54) pour le bloc de données d'émission comprennent un identifiant de séquence qui caractérise le sous-bloc de données d'émission de telle sorte que, lors de son utilisation, le bloc de données d'émission (56) peut être formé à partir des sous-blocs de données d'émission, et l'identifiant de séquence est utilisé pour écrire les sous-blocs de données d'émission dans la mémoire (44).

5. Procédé selon l'une quelconque des revendications précédentes, dans lequel les données de gestion de chacun des paquets Ethernet (54) de la séquence de paquets Ethernet pour le bloc de données d'émission (56) comprennent un identifiant de bloc de données d'émission caractérisant le bloc de données d'émission (56).

6. Procédé selon l'une quelconque des revendications précédentes, dans lequel, pour au moins l'un des sous-blocs de données d'émission, au moins deux paquets Ethernet (54), dont le bloc de données utiles contient respectivement le sous-bloc de données d'émission, sont formés et émis vers le moyen de réception (24) par l'intermédiaire de la connexion Ethernet (25), et lors de la réception de plus d'un paquet Ethernet (54) pour le même sous-bloc de données d'émission, les données du sous-bloc de données d'émission ne sont écrites qu'une seule fois dans la mémoire (44) ou les données du sous-bloc de données d'émission sont écrasées dans la mémoire (44) .

7. Procédé selon l'une quelconque des revendications précédentes, dans lequel au moins un autre moyen d'émission (22⁽¹⁾ ... 22⁽⁷⁾) forme, à partir des données d'un autre bloc de données d'émission (56) qu'il doit émettre, une autre séquence de paquets Ethernet (54) comprenant chacun des données de gestion et un sous-bloc de données d'émission formé à partir d'au moins une partie des données, de telle sorte que les sous-blocs de données d'émission des paquets Ethernet (54) de l'autre séquence comprennent les données de l'autre bloc de données d'émission (56), dans lequel les données de gestion comprennent des données de gestion à partir desquelles il est possible de déterminer si l'un des paquets Ethernet (54) est le dernier paquet Ethernet de l'autre séquence, et émet les paquets Ethernet formés par l'intermédiaire d'une connexion Ethernet vers le moyen de réception (24'), et dans lequel le moyen de réception (24'), après avoir reçu les paquets Ethernet (54), traite ces-derniers en fonction du moyen d'émission (22, 22⁽¹⁾... 22⁽⁷⁾) qui les a émis, de préférence séparément, vers le moyen d'émission.

8. Moyen d'émission (22) destiné à émettre au moins un bloc de données d'émission (56), dans lequel les données d'émission contenues dans le bloc de données d'émission (56) sont des données de capteur d'un capteur (22), destiné à examiner des documents de valeur (12), qui constitue au moins une partie d'un capteur (22) ou qui comprend un capteur ou qui forme au moins une partie d'un moyen d'évaluation, lequel moyen d'émission comporte un tampon d'émission (34) destiné à mémoriser au moins partiellement et temporairement des données du bloc de données d'émission (56), et
une interface Ethernet (38), et
est conçu pour former, à partir du bloc de données d'émission (56), une séquence de paquets Ethernet (54) qui comprennent respectivement des données de gestion et un sous-bloc de données d'émission formé à partir du bloc de données d'émission (56) respectif, de telle sorte que les sous-blocs de données d'émission des paquets Ethernet (54) de la séquence comprennent les données du bloc de données d'émission (56), les données de gestion comprenant des données de gestion à partir desquelles il est possible de déterminer si l'un des paquets Ethernet (54) est le dernier paquet Ethernet de la séquence, et pour émettre les paquets Ethernet (54) par l'intermédiaire de l'interface Ethernet (38).

9. Moyen d'émission selon la revendication 8, comprenant en outre un processeur (32) et des instructions d'un programme d'ordinateur lors de l'exécution desquelles le processeur forme la séquence de paquets Ethernet (54) à partir du bloc de données d'émission (56) dans la mémoire tampon d'émission.

10. Moyen d'émission selon la revendication 8 ou la revendication 9, comprenant un FPGA (51) connecté à l'interface Ethernet (38) ou formant au moins une partie de l'interface Ethernet (38), qui est programmé de manière à former à partir du sous-bloc de données d'émission (56) les données de gestion et les sous-blocs de données d'émission pour la séquence de paquets Ethernet (54) respective.

11. Moyen d'émission selon la revendication 8 ou la revendication 9, dans lequel l'interface Ethernet (38) comporte un contrôleur Ethernet présentant une fonctionnalité DMA interne et conçu pour pouvoir élaborer de manière autonome des listes de descripteurs.

12. Moyen de réception (24 ; 24') destiné à recevoir des séquences de paquets Ethernet qui peuvent être formées par un moyen d'émission (22) selon l'une des revendications 8 à 11 et/ou qui ont été formées par un procédé selon les revendications 1 à 7, et qui contiennent respectivement des sous-blocs de données d'émission d'un bloc de données d'émission (56), comportant
une mémoire (44) destinée à mémoriser un bloc de données d'émission transmis,
un processeur (40) destiné à traiter au moins partiellement le bloc de données d'émission mémorisé dans la mémoire (44), et
une partie de réception (46 ; 46') conçue pour recevoir des séquences de paquets Ethernet (54) contenant des données du sous-bloc de données d'émission (56) et pour écrire dans la mémoire (44), à l'aide d'au moins une partie des données de gestion, les sous-blocs de données d'émission respectivement contenus dans les paquets Ethernet reçus (54),
dans lequel la partie de réception (46 ; 46') est en outre conçue de manière à ce que la partie de réception (46 ; 46') n'émette pas d'interruption vers le processeur (40) pendant ou après l'écriture de chacun des sous-blocs de données d'émission.

13. Moyen de réception selon la revendication 12, dans lequel la partie de réception (46 ; 46') est configurée pour fournir en sortie au processeur (40) un signal de réception, par exemple une interruption, et de préférence pour ne le fournir que lorsqu'un nombre prédéfini de paquets Ethernet (54) de la même séquence ont été reçus et que les données d'émission des sous-blocs de données d'émission qu'ils contiennent ont été écrites dans la mémoire (44), et/ou lorsqu'au moins une erreur prédéfinie se produit lors de la réception ou de la mémorisation et/ou que les données d'émission ont été écrites dans la mémoire (44) à partir du bloc de données utiles du dernier paquet Ethernet de la séquence.

14. Moyen de réception selon la revendication 12 ou la revendication 13, dans lequel la partie de réception (46 ; 46') comprend un FPGA (50 ; 50'), dans lequel la partie de réception (46 ; 46') est conçue et le FPGA (50) configuré ou programmé de telle sorte qu'au moyen du FPGA (50) et à l'aide des données de gestion, les sous-blocs de données d'émission sont écrits dans la mémoire (44) à partir de paquets Ethernet (54) reçus, et que le FPGA (50) déclenche la fourniture en sortie au processeur (40) d'un signal de réception, par exemple une interruption, de préférence après l'écriture des sous-blocs de données d'émission d'un nombre prédéfini de paquets Ethernet (54) de la séquence dans la mémoire (44) et/ou l'écriture d'un dernier sous-bloc de données d'émission de la séquence.

15. Moyen de réception selon la revendication 14, dans lequel la partie de réception (46 ; 46') comporte un PHY connecté au FPGA (50 ; 50') par l'intermédiaire d'une connexion de données, dans lequel le FPGA (50 ; 50') est en outre configuré ou programmé pour fonctionner également en tant que contrôleur Ethernet.

16. Moyen de réception selon l'une quelconque des revendications 14 ou 15, dans lequel le FPGA (50 ; 50), le processeur (40) et la mémoire (44) sont connectés par l'intermédiaire d'un réseau PCIe.

17. Moyen de réception selon l'une quelconque des revendications 14 à 16, comprenant une pluralité de PHY connectés au FPGA (50 ; 50'), le FPGA (50 ; 50') étant programmé de manière à écrire respectivement dans la mémoire (44) des sous-blocs de données d'émission de paquets Ethernet reçus par l'un, respectif, des PHY.

18. Moyen de réception selon l'une quelconque des revendications 12 à 17, comprenant également un moyen d'émission (22) selon l'une quelconque des revendications 8 à 11, dans lequel l'interface Ethernet du moyen d'émission (22) est définie par une section de la partie de réception (46 ; 46') qui fonctionne également en tant qu'interface Ethernet du moyen d'émission (22).

19. Dispositif de traitement de documents de valeur (12) comportant
un moyen d'introduction (14) destiné à introduire des documents de valeur (12) individuels,
un moyen de fourniture en sortie 6) destiné à fournir en sortie des documents de valeur (12) traités,
un moyen de transport (18) destiné à transporter des documents de valeur individuels depuis le dispositif d'introduction (14) vers le dispositif de fourniture en sortie (18),
un moyen de détection 822) destiné à détecter des propriétés physiques de documents de valeur transportés par le moyen de transport (18) et à former des données de capteur pour le document de valeur respectif, et
un moyen d'évaluation (24) connecté par l'intermédiaire d'une connexion Ethernet (25) au moyen de détection (22) pour évaluer les données de capteur du moyen de détection (22) et commander le moyen de transport (18) en fonction du résultat de l'évaluation des données de capteur,
dans lequel le moyen de détection (22) est utilisé en tant que moyen d'émission selon l'une quelconque des revendications 8 à 11 pour transmettre les données de capteur pour un document de valeur sous la forme d'un bloc de données d'émission, et
le moyen d'évaluation (24) est réalisé sous la forme d'un moyen de réception selon l'une quelconque des revendications 12 à 18.
